(19) **Europäisches Patentamt / European Patent Office / Office européen des brevets**

(11) **EP 4 755 939 A1**

(12) # EUROPEAN PATENT APPLICATION

(43) Date of publication:
**10.06.2026 Bulletin 2026/24**

(21) Application number: **24217958.8**

(22) Date of filing: **06.12.2024**

(51) International Patent Classification (IPC):
*C08G 18/38* $^{(2006.01)}$     *C08G 18/42* $^{(2006.01)}$
*C08G 18/80* $^{(2006.01)}$     *C09D 175/04* $^{(2006.01)}$
*C09D 175/06* $^{(2006.01)}$    *C08G 18/32* $^{(2006.01)}$
*C08G 18/50* $^{(2006.01)}$     *C08G 18/61* $^{(2006.01)}$
*C08G 77/458* $^{(2006.01)}$    *C09D 167/00* $^{(2006.01)}$

(52) Cooperative Patent Classification (CPC):
**C09D 175/04; C08G 18/3206; C08G 18/3893;
C08G 18/42; C08G 18/5096; C08G 18/61;
C08G 18/80; C08G 77/458; C09D 167/00;
C09D 175/06;** C08G 2150/20

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Jotun A/S**
**3202 Sandefjord (NO)**

(72) Inventor: **Ahoba-Sam, Christian**
**3222 Sandefjord (NO)**

(74) Representative: **Marks & Clerk LLP**
**15 Fetter Lane**
**London EC4A 1BW (GB)**

(54) **COMPOSITION**

(57)     The present invention provides a two-component powder coating composition comprising:
(i) a first component comprising:
(a) a polyester having carboxy functional groups and/or a polyester having hydroxy functional groups;
(b) a curing agent for said polyester (a) selected from a blocked polyisocyanate curing agent, a beta-hydroxy alkyl amide (HAA) curing agent, or a combination thereof; and
(c) optionally, a hydroxy functionalised silicone with phenyl, or phenyl and methyl, substituents;
and
(ii) a second component comprising:
(a) a hydroxy functionalised silicone with phenyl, or phenyl and methyl, substituents;

(b) optionally a polyester having carboxy functional groups and/or a polyester having hydroxy functional groups;
(c) a curing agent for said polyester (b), if present; selected from a blocked polyisocyanate curing agent, a beta-hydroxy alkyl amide (HAA) curing agent, or a combination thereof
wherein
said first component and said second component are different; and
the weight ratio of said hydroxy functionalised silicone(s) with phenyl, or phenyl and methyl, substituents to said polyester(s) having carboxy and/or hydroxy functional groups is greater than 40:60, based on the total composition.

EP 4 755 939 A1

**Description**

INTRODUCTION

The present invention relates to a two-component powder coating composition, and to a kit for preparing, as well as a method of making, the composition. The invention also relates to use of the two-component power coating composition to coat a substrate, and to methods of coating a substrate, in particular a metal substrate. The resulting coating and coated substrate form further aspects of the invention.

BACKGROUND

The present invention relates to polyfluoro alkyl substance (PFAS) free powder coating compositions which have very high weather durability, making them highly suitable for use on exterior products. Powder coatings are often applied on three dimensional substrates, such as building components, in the construction industry to improve their appearance and weatherability performance. The extent to which coatings resist elements of the weather such as UV radiation, temperature and relative humidity among others determines the class of the coating as being of normal durability, super durability or ultra/hyper durability. The level of durability achieved depends, *inter alia,* on the choice of the binder system.
The type of polymers typically used for weather durable powder coatings are typically polyesters, polyurethanes and acrylics or acrylates. At their best, these organic polymers will generally attain the "super" durability level of weather resistance. This is because of the kind, and strength, of the bonds (e.g. C-C, C-N, C-H or C-O single bonds) present in these polymers. These bonds are susceptible to cleavage by UV radiation (299 - 426 kJ/mol) that reaches the surface of the earth, thereby limiting their weathering performance.
To achieve higher levels of durability, a chemically stronger polymer structure is required in the binder system. Currently, fluoro-based binder systems are used to achieve this because C-F bonds (> 450 kJ/mol) are normally stronger than the energy provided by UV A and B radiation. However, pure fluoropolymers tend to poorly adhere to substrates and therefore produce relatively poor weatherability performance in other key properties, such as adhesion and subsequently corrosion resistance. As a result, fluoropolymers are often combined with organic polymers to influence the flexibility and adhesion properties of the overall binder. The hybrid system of a fluoropolymer and a polyester polymer tends to give an overall better performance in appearance, adhesion, mechanical strength, and weathering resistance.
The fluoropolymers present in such hybrid binder systems to enhance weather durability tend to be Per/Poly Fluoro Alkyl Substances (PFAS). However, there are growing concerns about the non-degradable nature of PFAS, also known as forever chemicals. These chemicals pose a threat to the environment, water bodies and health. Some of the fluoropolymers currently used in popular coatings are likely to be banned in the short-to-medium term.
A further challenge to be overcome in powder coatings is to avoid triglycidyl isocyanurate (TGIC) as a curing agent. It is known to produce durable coatings, but as a raw material is heavily labelled, and presents a health hazard for powder factory workers and hazards for the environment. The final powder product is also labelled, causing hazards for end users, and there could also be added costs for disposing of scrap powder due to the environmental hazards. TGIC is also a part of the REACH (Registration, Evaluation, Authorisation and Restriction of Chemicals) SVHC (substances of very high concern) list. Organisations like LEED (Leadership in Energy and Environmental Design) are encouraging use of materials outside the SVHC list.
The desire to avoid PFAS polymers, as well as TGIC, in the binder system in powder coatings creates a gap in providing coatings with ultra weather durability as well as adhesion.

SUMMARY OF INVENTION

The present invention relates to a two-component powder coating composition comprising:

(i) a first component comprising:

(a) a polyester having carboxy functional groups and/or a polyester having hydroxy functional groups;
(b) a curing agent for said polyester (a) selected from a blocked polyisocyanate curing agent, a beta-hydroxy alkyl amide (HAA) curing agent, or a combination thereof; and
(c) optionally, a hydroxy functionalised silicone with phenyl, or phenyl and methyl, substituents;

and
(ii) a second component comprising:

(a) a hydroxy functionalised silicone with phenyl, or phenyl and methyl, substituents;
(b) optionally a polyester having carboxy functional groups and/or a polyester having hydroxy functional groups;
(c) a curing agent for said polyester (b), if present, selected from a blocked polyisocyanate curing agent, a beta-hydroxy alkyl amide (HAA) curing agent, or a combination thereof;

wherein
said first component and said second component are different; and the weight ratio of said hydroxy functionalised silicone(s) with phenyl, or phenyl and methyl, substituents to said polyester(s) having carboxy and/or hydroxy functional groups is greater than 40:60, based on the total composition.

The present invention also relates to a method of making a two-component powder coating composition as hereinbefore described, comprising:

(i) preparing a first component by mixing:

(a) a polyester having carboxy functional groups and/or a polyester having hydroxy functional groups;
(b) a curing agent for said polyester (a) selected from a blocked polyisocyanate curing agent, a beta-hydroxy alkyl amide (HAA) curing agent, or a combination thereof; and
(c) optionally, a hydroxy functionalised silicone with phenyl, or phenyl and methyl, substituents;

and
(ii) preparing a second component by mixing:

(a) a hydroxy functionalised silicone with phenyl, or phenyl and methyl, substituents;
(b) optionally a polyester having carboxy functional groups and/or a polyester having hydroxy functional groups;
(c) a curing agent for said polyester (b), if present, selected from a blocked polyisocyanate curing agent, a beta-hydroxy alkyl amide (HAA) curing agent, or a combination thereof.

The present invention also relates to the use of a two-component powder coating composition as hereinbefore described to coat at least one surface of a substrate, in particular a metal substrate.

The present invention also relates to a kit for preparing a two-component powder coating composition as hereinbefore described, comprising:

(i) a first container containing a first component comprising:

(a) a polyester having carboxy functional groups and/or a polyester having hydroxy functional groups;
(b) a curing agent for said polyester (a) selected from a blocked polyisocyanate curing agent, a beta-hydroxy alkyl amide (HAA) curing agent, or a combination thereof; and
(c) optionally, a hydroxy functionalised silicone with phenyl, or phenyl and methyl, substituents;

and
(ii) a second container containing a second component comprising:

(a) a hydroxy functionalised silicone with phenyl, or phenyl and methyl, substituents;
(b) optionally a polyester having carboxy functional groups and/or a polyester having hydroxy functional groups;
(c) a curing agent for said polyester (b), if present, selected from a blocked polyisocyanate curing agent, a beta-hydroxy alkyl amide (HAA) curing agent, or a combination thereof.

The present invention also relates to a method of coating a substrate, preferably a metal substrate, with a two-component powder coating composition as hereinbefore described, comprising:

Mixing said first component and said second component to produce a powder blend;
Applying said powder blend to at least one surface of said substrate; and Curing said powder blend to produce said coating.

The present invention also relates to a method of coating a substrate, preferably a metal substrate, with a two-component powder coating composition as hereinbefore described, comprising:

Applying said first component to at least one surface of said substrate to produce a layer of first component;

Applying said second component to said layer of first component to produce a layer of second component; and
Curing said layers to produce said coating.

The present invention also relates to a coating, preferably a cured coating, comprising a two-component powder coating composition as hereinbefore described.

The present invention also relates to a substrate, preferably a metal substrate, coated with a two-component powder coating composition as hereinbefore described.

DEFINITIONS

As used herein, the term "powder coating composition" refers to dry, free flowing powder which when applied to a surface and heated, e.g. cured, forms a coating thereon. Typically, the particles that constitute the powder have an average diameter of 10-120 $\mu$m.

As used herein, the term one-component or 1K refers to a powder coating composition consisting of a single powder applied directly onto the surface of a substrate before curing.

As used herein, the term two-component or 2K refers to a powder coating composition consisting of two separate powders which are either mixed (dry blended) before application on a substrate or applied separately in two consecutive layers on a substrate just before curing.

As used herein, the term "free flowing" refers to a solid particulate powder composition which does not stick together and has a little or no clumping or aggregates between individual particles. A free flowing powder enables the powder coating composition to be sprayed.

As used herein, the term "polyester having carboxy functional groups" refers to a polymer comprising ester (-COO-) linker groups and having COOH groups. This type of polyester does not have a significant amount of OH groups.

As used herein, the term "AV" or "acid value" refers to the number of mg KOH required to neutralize the alkali-reactive groups in 1 g of polymer and has the units (mg KOH/g polymer). The acid value can be determined according to BS EN ISO 2114:2000 standard.

As used herein, the term "polyester having hydroxy functional groups" refers to a polymer comprising ester (-COO-) linker groups and having OH groups. This type of polyester does not have a significant amount of COOH groups.

As used herein, the term "OHV" or "hydroxy value" refers to the number of milligrams (mg) of KOH equivalent to the hydroxyl groups present in each gram (g) of polymer and has the units (mg KOH/g polymer). The hydroxy value can be determined according to ASTM D4274-23 standard.

As used herein the term "silicone" or "polysiloxane" refers to a polymer which forms a 3-dimensional network having a Si-O-Si backbone and organic groups attached to the silicon atoms. The "silicone" herein is a "hydroxyl functionalised silicone with phenyl, or phenyl and methyl, substituents". This means there are OH groups attached to at least some silicon atoms. There are also phenyl or phenyl and methyl groups attached to at least some silicon atoms.

As used herein, the term "binder system" refers to the total combination of polymer(s) or binder(s) and curing agent(s) in a component, or in the total composition. The various polyesters and silicones present in the coating composition are binders, also referred to herein as resins or polymers.

As used herein, the term "curing agent" refers to a compound which, when mixed with the polymer or binder, produces a cured or hardened coating by generating cross-links within the polymer when heated. Sometimes curing agents are referred to as hardeners.

As used herein, the term "internally blocked polyisocyanate" refers to polyisocyanate curing agent wherein the reactive groups are rendered inert through formation of an uretdione ring, which is cleaved upon heating.

As used herein, the term "blocked polyisocynate" refers to polyisocyanate curing agent which is rendered inert through use of $\epsilon$-caprolactam, which is released upon heating. Use of internally blocked or blocked polyisocyanates provides latent reactive isocyanate groups, which can react with hydroxy functional groups in polyesters under appropriate conditions.

As used herein the term "polyfluoro alkyl substance" refers to a compound comprising an alkyl chain, wherein one or more hydrogen atoms are substituted by fluorine.

As used herein the term "perfluoro alkyl substance" refers to a compound comprising an alkyl chain, wherein all of the hydrogen atoms are substituted by fluorine.

As used herein, the term "degassing agent" refers to a compound that is added to a composition to remove gases, e.g. air, water vapour, and/or promote dissolution of gases so as to avoid the formation of pinholes and bubbles in the coating once formed.

As used herein, the term "levelling agent" sometimes referred to as "flow agent" refers to a compound that is added to powder coating composition to moderate the surface tension or surface free energy of the film formed and to reduce surface imperfections, e.g. craters, pinholes and fisheyes, and increase the surface smoothness.

As used herein, the term "colour pigment" is a pigment that is added to a composition to give colour. Colour pigments include e.g. white pigments, such as $TiO_2$, $Fe(OH)_3$, FeO, Carbon black.

As used herein, the term "filler" refers to solid particles. Typically, fillers are incorporated into powder coating compositions to increase their volume. Sometimes fillers are referred to as "extenders". Fillers include e.g. $BaSO_4$, and $Al_2(OH)_3$.

As used herein, the term "UV stabilizing agent" comprises ultraviolet (UV) absorbers, hindered amine light stabilizers (HALS) and anti-oxidants which help to stabilize the coating against weathering conditions such as light and heat.

As used herein, the term "accelerator" refers to a compound that initiate and accelerate crosslinking reactions in a coating without getting chemically consumed in the process. An accelerator might also be referred to as a catalyst or initiator.

As used herein, the term "matting agent" refers to a compound that is added to a powder coating composition to reduce its gloss level.

As used herein, the term "number average molecular weight" refers to average of the molecular weights of individual constituents.

As used herein the term "average diameter" refers to the Z-average diameter size as determined by ISO 22412:2017 using e.g. a Malvern Mastersizer 3000.

As used herein the term "$D_{50}$" refers to the size at which 50% of the particles have a diameter smaller than the value recited.

As used herein the term "curing" refers to a process where a substrate covered with powder is heated to temperatures above the reaction initiation temperature of the chosen powder coating composition for a time long enough for the coating to form a fully crosslinked network.

As used herein the term "significant curing" refers to the process of heating the substrate covered with powder above the reaction initiation temperature to allow crosslinking network to be initiated or formed.

As used herein the term "ambient" temperature refers to 25 °C. The term "ambient pressure" refers to 1 atm.

DETAILED DESCRIPTION OF THE INVENTION

The present invention relates to a two-component powder coating composition comprising:

(i) a first component comprising:

(a) a polyester having carboxy functional groups and/or a polyester having hydroxy functional groups;
(b) a curing agent for said polyester (a) selected from a blocked polyisocyanate curing agent, a beta-hydroxy alkyl amide (HAA) curing agent, or a combination thereof; and
(c) optionally, a hydroxy functionalised silicone with phenyl, or phenyl and methyl, substituents;

and
(ii) a second component comprising:

(a) a hydroxy functionalised silicone with phenyl, or phenyl and methyl, substituents;
(b) optionally a polyester having carboxy functional groups and/or a polyester having hydroxy functional groups;
(c) a curing agent for said polyester (b) if present, selected from a blocked polyisocyanate curing agent, a beta-hydroxy alkyl amide (HAA) curing agent, or a combination thereof;

wherein
said first component and said second component are different; and the weight ratio of said hydroxy functionalised silicone(s) with phenyl, or phenyl and methyl, substituents to said polyester(s) having carboxy and/or hydroxy functional groups is greater than 40:60, based on the total composition.

The two-component powder coating composition of the present invention is highly advantageous because the resulting coatings achieve a high level of adhesion to underlying substrates (e.g. to metal surfaces) as well as high levels of weather durability, in particular UV resistance. The two-component powder coating compositions can provide coatings with hyper UV resistance. The UV resistance may be achieved without using UV stabilisers, although such stabilisers may be incorporated into the two-component coating composition to further improve UV resistance.

Advantageously the two-component powder coating composition of the invention does not require TGIC to achieve these high performance levels. Instead, more environmentally friendly, HAA and/or blocked isocyanate curing agents may be employed. Moreover, the composition is able to tolerate a wide range of amounts of pigments and/or fillers.

Furthermore, the gloss level of the resulting coatings may be controlled over a wide range. For examples, coatings may be provided by the two-component coating composition of the invention which have a matt or glossy finish, as desired. This makes the two-component powder coating compositions of the invention ideal for architectural purposes.

Typically, the two-component powder coating composition of the invention is a free flowing powder. It may be applied as a blend, or as separate powders, via a dry-on-dry application. It is generally facile to handle, and apply.

*Definition of First Component*

The first component of the powder coating composition of the present invention comprises a polyester having carboxy functional groups and/or a polyester having hydroxy functional groups. Optionally the first component of the powder coating composition comprises a polyester having carboxy functional groups and a polyester having hydroxy functional groups. Preferably, however, the first component of the powder coating composition of the present invention comprises a polyester having carboxy functional groups or a polyester having hydroxy functional groups. More preferably the first component comprises a polyester having carboxy functional groups.

When the first component of the powder coating composition of the present invention comprises a polyester having carboxy functional groups, the polyester having carboxy groups is preferably substantially free, e.g. is free, of hydroxy groups. It is, however, possible that low levels of OH groups remain in the polymer due to the synthesis of the polymer. Such polymers herein are considered to be substantially free of hydroxy groups.

Preferably the polyester having carboxy functional groups has an AV of 15-50 mg KOH/g, and more preferably 18-46 mg KOH/g.

Preferably the polyester having carboxy functional groups has an OHV of less than 5 mg KOH/g, and more preferably less than 4 mg KOH/g, e.g. around 3 mg KOH/g, or lower.

Preferably the polyester having carboxy functional groups has an AV of 15-50 mg KOH/g, and preferably 18-46 mg KOH/g, and an OHV of less than 5 mg KOH/g, more preferably less than 4 mg KOH/g, and still more preferably less than 3 mg OHV.

The first component of the powder coating composition of the present invention preferably comprises a polyester having carboxy functional groups with a glass transition temperature (Tg) above 30 °C, preferably above 40 °C, and more preferably above 50 °C, e.g. between 50 to 70 °C.

The first component of the powder coating composition of the present invention preferably comprises a polyester having carboxy functional groups with a melt viscosity at 160 °C of 10-70 Pa.s and more preferably 25-65 Pa.s.

Preferably the first component of the powder coating composition of the present invention comprises an amorphous polyester having carboxy functional groups. The polyester present in the first component of the powder coating composition is generally considered as a saturated and amorphous resin.

Suitable polyester having carboxy functional groups for use in the first component are available commercially. Representative examples of suitable polyester having carboxy functional groups include Uralac P 883 and Uralac P6800 from Covestro AG, Crylcoat 4679 from Allnex and Reafree 5709 from Arkema. These polyesters, when used in the composition of the present invention, have the properties necessary to contribute to powder coating compositions having excellent weathering properties.

Suitable polyester having carboxy functional groups may also be synthesised by conventional routes.

When the first component of the powder coating composition of the present invention comprises a polyester having hydroxy functional groups, the polyester having hydroxy groups is substantially free, e.g. free, of carboxy groups. It is, however, possible that low levels of COOH groups remain in the polymer due to the synthesis of the polymer. Such polymers herein are considered to be substantially free of carboxy groups.

Preferably the polyester having hydroxy functional groups has an OHV of 20-250 mg KOH/g and more preferably 25-240 mg KOH/g.

Preferably the polyester having hydroxy functional groups has an AV of less than 7 mg KOH/g, and more preferably less than 6 mg KOH/g, or lower.

The first component of the powder coating composition of the present invention preferably comprises a polyester having hydroxy functional groups having an OHV of 20-250 mg KOH/g and more preferably 25-240 mg KOH/g, and an AV of less than 7 mg KOH/g, and more preferably less than 6 mg KOH/g.

The first component of the powder coating composition of the present invention preferably comprises a polyester having hydroxy functional groups which is solid at ambient temperature and pressure. Preferably the first component comprises a polyester having hydroxy functional groups having a glass transition temperature (Tg) above 30 °C, preferably above 40 °C, and more preferably above 50 °C, e.g. 50 to 70 °C.

The first component of the powder coating composition of the present invention preferably comprises a polyester having hydroxy functional groups having a melt viscosity at 160 °C of 10 to 65 Pa.s., preferably 15 to 50 Pa.s. and more preferably 15 to 45 Pa.s.

Preferably the first component of the powder coating composition of the present invention comprises an amorphous polyester having hydroxy functional groups. The polyester present in the first component of the powder coating composition is generally considered as a saturated and amorphous resin.

Suitable polyester having hydroxy functional groups for use in the first component are available commercially. Representative examples of suitable polyester having hydroxy functional groups include Uralac P 1625, Uralac P1675 and Uralac 1680 from Covestro AG. These polyesters, when used in the composition of the present invention, have the properties necessary to contribute to powder coating compositions having excellent weathering properties.

Suitable polyesters can also be prepared as commonly known in the art.

The first component of the powder coating composition of the present invention optionally comprises a hydroxy functionalised silicone with phenyl, or phenyl and methyl, substituents. The silicone present in the first component, if present, may have 100% Si-O-Si back bone. The silicone present in the first component preferably has phenyl substituents, or a mixture of phenyl and methyl substituents, on the Si-O-Si back bone. When the silicone is substituted with both phenyl and methyl groups, the substitution is preferably a 1:1 substitution. Preferably solely phenyl and/or methyl substituents are present on the hydroxyl functionalised silicone.

The first component of the powder coating composition of the present invention preferably comprises a hydroxy functionalised silicone with phenyl, or phenyl and methyl, substituents having a OH content of 3.5-7 % (corresponding to an OHV of 0.6-3 mg KOH/g).

The first component of the powder coating composition of the present invention preferably comprises a hydroxy functionalised silicone with phenyl, or phenyl and methyl, substituents that is solid at ambient temperature and pressure. Preferably the hydroxy functionalised silicone with phenyl, or phenyl and methyl, substituents has a glass transition temperature (Tg) of above 30 °C, preferably above 40 °C, and more preferably 45-70 °C.

The first component of the powder coating composition of the present invention preferably comprises a hydroxy functionalised silicone with phenyl, or phenyl and methyl, substituents having a molecular weight (Mw) of 1200-3100 g/mol, and more preferably 1400-2700 g/mol.

The first component of the powder coating composition of the present invention preferably comprises a hydroxy functionalised silicone with phenyl, or phenyl and methyl, substituents having a melt viscosity at 170 °C of 0.2-1 Pa.s and more preferably 0.22-0.44 Pa.s.

The hydroxy functionalised silicone with phenyl, or phenyl and methyl, substituents may or may not react with the polyester and/or the crosslinking agent.

Suitable hydroxy functionalised silicone with phenyl, or phenyl and methyl, substituents for use in the first component are available commercially. Representative examples include Silres 603 and Silres 604 from Wacker.

The first component of the powder coating composition of the present invention preferably comprises 50-90 wt%, more preferably 55-86 wt% and still more preferably 55-83 wt% polyester having carboxy functional groups and/or polyester having hydroxy functional groups, based on the total weight of the first component.

The first component of the powder coating composition of the present invention preferably comprises 0-15 wt%, more preferably 0-13 wt% and still more preferably 0-12 wt% of hydroxy functionalized silicone with phenyl or methyl and phenyl substitution, based on the total weight of the first component.

In a preferred first component of the powder coating composition of the present invention the weight ratio of the hydroxy functionalized silicone with phenyl or methyl and phenyl substitution to the polyester having carboxy functional groups and/or the polyester having hydroxyl functional groups in said first component is 0:100 to 22:78, preferably 0:100 to 20:80, and more preferably 0:100 to 17:83.

The first component of the powder coating composition of the present invention preferably comprises 50-90 wt%, more preferably 55-89 wt% and still more preferably 55-88 wt% total amount of polyester having carboxy functional groups and/or polyester having hydroxy functional groups and hydroxy functionalized silicone with phenyl or methyl/phenyl substitution, based on the total weight of the first component.

The first component of the powder coating composition of the present invention also comprises a curing agent. The curing agent reacts with the functional groups of the polyester(s) during curing to form a coating, e.g. a film coating. The curing agent therefore facilitates the provision of a coating composition with an acceptable cure time.

The curing agent present in the first component of the powder coating composition of the present invention is selected from a blocked polyisocyanate curing agent, a beta-hydroxy alkyl amide (HAA) curing agent, or a combination thereof. The curing agent selected depends on the functional groups present in the polyester.

The curing agent for carboxy groups present in the first component is preferably a beta-hydroxy alkyl amide. At elevated temperatures, the HAA curing agent reacts with the carboxy groups of the polyester(s) and creates a crosslinked network in the coating film.

Theoretically, TGIC could also be used to cure carboxy groups present in the polyester(s). However, as mentioned above, TGIC is heavily labelled, and presents a health hazard for powder factory workers and hazards for the environment. Preferably, therefore, the curing agents present in the first component of the powder coating composition of the present invention is not TGIC.

Suitable commercially available β-hydroxy alkyl amides for use in the first component include N,N,N',N'-tetrakis(2-hydroxyethyl)adipamide sold under trade names Primid XL-552 from EMS-Primid, Megamid XL from Megara Resins or HH8080 from Huangshan Huahui Technology Co. Ltd, and N,N,N',N'-tetrakis(2-hydroxypropyl)apidamide sold under trade names Primid QM-1260 from EMS-Primid, or HH8260 from Huangshan Huahui Technology Co. Ltd. Typically, N,N,N',N'-tetrakis(2- hydroxyethyl)adipamide will have an OH value in the range of 620 - 720 mg KOH/g, and N,N,N',N'-tetrakis(2-hydroxypropyl)apidamide will have an OH value in the range of 550 - 600 mg KOH/g.

Preferably the curing agent for polyester having hydroxy functional groups is a blocked polyisocyanate curing agent. At elevated temperatures, the blocked polyisocyanate curing agent reacts with the hydroxy groups of the polyester and creates a crosslinked network in the coating film.

Three main types of polyisocyanates are commonly used: Internally blocked polyisocyanates, also referred to as blocking-free curing agents, blocked polyisocyanates and unblocked polyisocyanates. In the first component of the powder coating composition of the present invention, the polyisocyanate curing agent is a blocked polyisocyanate. Unblocked polyisocyanates are undesirable as they are prone to react at lower temperatures and may become at least partly deactivated after the extrusion process.

Suitable blocked polyisocyanate curing agents are available commercially. Representative examples include blocked polyisocyanate curing agents like Vestagon B1530 from Evonik, ICASON1530 from Icason, Crelan NW 5 and Crelan UI from Covestro AG. Such polyisocyanate curing agents typically have equivalent weights in the range of 270 - 340 g/eq.

It will be appreciated that the curing agents and the polyester(s) need to react in order to cure the coating. The suitable amounts of curing agents and polyester(s) depends on the relative numbers of reactive groups, i.e. carboxy/hydroxy groups in polyester(s) and hydroxy/isocyanate groups in the curing agents. It is preferred if the curing agents are present in the first component in a stoichiometric amount that is 80-120 %, more preferably 90-115 % and still more preferably 95-105 %, based on the number of reactive groups in the curing agents relative to the number of reactive groups present in the polyester(s).

The first component of the powder coating composition of the present invention preferably comprises 1-11 wt%, more preferably 1-10.5 wt% and still more preferably 1.7-10.2 wt% of a curing agent selected from a blocked polyisocyanate curing agent, a beta-hydroxy alkyl amide (HAA) curing agent, or a combination thereof, based on the total weight of the first component.

The first component of the powder coating composition of the present invention preferably comprises 1-5 wt%, more preferably 1-4 wt% and still more preferably 2-4 wt % HAA curing agent if present, based on the total weight of the first component.

The first component of the powder coating composition of the present invention preferably comprises 0.1-11 wt%, more preferably 1-10.5 wt% and still more preferably 2-10.2 wt % blocked polyisocyanate curing agent if present, based on the total weight of the first component.

Preferably the first component of the powder coating composition of the present invention does not comprise/is free of TGIC, i.e. comprises 0 wt% TGIC.

A preferred first component of the powder coating composition comprises a total amount of binder system, i.e. a total amount of polyester having carboxy functional groups and/or polyester having hydroxy functional groups and hydroxy functionalised silicone with phenyl, or phenyl and methyl, substituents as well as curing agent, of 60-95 wt%, more preferably 65-92 wt% and still more preferably 65-90 wt%, based on the total weight of the first component.

*Definition of second component*

The second component of the powder coating composition of the present invention is different to the first component.

Preferably the second component contains a higher wt% of hydroxy functionalised silicone with phenyl, or phenyl and methyl, substituents, compared to said first component.

Preferably the second component contains a lower wt% of polyester having carboxy functional groups and/or polyester having hydroxy functional groups, compared to said first component.

Preferably the second component contains a higher wt% of hydroxy functionalised silicone with phenyl, or phenyl and methyl, substituents, and a lower wt% of polyester having carboxy functional groups and/or polyester having hydroxy functional groups, compared to said first component.

Preferably the second component contains a higher wt% of UV stabilisers compared to said first component.

Preferably the second component contains a lower wt% of colour pigments compared to said first component.

Preferably the second component contains a higher wt% of hydroxy functionalised silicone with phenyl, or phenyl and methyl, substituents; a lower wt% of polyester having carboxy functional groups and/or polyester having hydroxy functional groups; a higher wt% of UV stabilisers; and a lower wt% of colour pigments, compared to said first component.

The second component of the powder coating composition of the present invention comprises a hydroxy functionalised silicone with phenyl, or phenyl and methyl, substituents. The silicone present in the second component may have 100% Si-O-Si back bone. The silicone present in the second component preferably has phenyl substituents, or a mixture of phenyl and methyl substituents, on the Si-O-Si back bone. When the silicone is substituted with both phenyl and methyl groups, the substitution is preferably a 1:1 substitution. Preferably solely phenyl and/or methyl substituents are present on the hydroxyl functionalised silicone.

The second component of the powder coating composition of the present invention preferably comprises a hydroxy functionalised silicone with phenyl, or phenyl and methyl, substituents having a OH content of 3.5-7 % (corresponding to an OHV of 0.6-3 mg KOH/g).

The second component of the powder coating composition of the present invention preferably comprises a hydroxy functionalised silicone with phenyl, or phenyl and methyl, substituents is preferably solid at ambient temperature and pressure. Preferably the hydroxy functionalised silicone with phenyl, or phenyl and methyl substituents has a glass transition temperature (Tg) of above 30 °C, preferably above 40 °C, and more preferably 45-70 °C.

The second component of the powder coating composition of the present invention preferably comprises a hydroxy functionalised silicone with phenyl, or phenyl and methyl, substituents having a molecular weight (Mw) of 1200-3100 g/mol, and more preferably 1400-2700 g/mol.

The second component of the powder coating composition of the present invention preferably comprises a hydroxy functionalised silicone with phenyl, or phenyl and methyl, substituents having a melt viscosity at 170 °C of 0.2-1 Pa.s and more preferably 0.22-0.44 Pa.s.

Suitable hydroxy functionalised silicone with phenyl, or phenyl and methyl, substituents for use in the second component are available commercially. Representative examples of suitable resins include Silres 603 and Silres 604 from Wacker.

The second component of the powder coating composition of the present invention optionally comprises a polyester having carboxy and/or a polyester having hydroxy functional groups. Optionally the second component of the powder coating composition comprises a polyester having carboxy functional groups and a polyester having hydroxy functional groups. Preferably, however, the second component of the powder coating composition of the present invention comprises a polyester having carboxy functional groups or a polyester having hydroxy functional groups. More preferably the second component comprises a polyester having hydroxy functional groups.

When the second component of the powder coating composition of the present invention comprises a polyester having hydroxy functional groups, it is preferred that the polyester is substantially free, e.g. free, of carboxy groups. It is, however, possible that low levels of COOH groups remain in the polymer due to the synthesis of the polymer. Such polymers herein are considered to be substantially free of carboxy groups.

Preferably the polyester having hydroxy functional groups has an OHV of 20-250 mg KOH/g and more preferably 25-240 mg KOH/g.

Preferably the polyester having hydroxy functional groups has an AV of less than 7 mg KOH/g, and more preferably less than 6 mg KOH/g, or lower.

The second component of the powder coating composition of the present invention preferably comprises a polyester having hydroxy functional groups having an OHV of 20-250 mg KOH/g and more preferably 25-240 mg KOH/g, and an AV of less than 7 mg KOH/g, and more preferably less than 6 mg KOH/g.

The second component of the powder coating composition of the present invention preferably comprises a polyester having hydroxy functional groups which is solid at ambient temperature and pressure. Preferably the second component comprises a polyester having hydroxy functional groups having a Tg above 30 °C, preferably above 40 °C, and more preferably between 50 to 70 °C.

The second component of the powder coating composition of the present invention preferably comprises a polyester having hydroxy functional groups having a melt viscosity at 160 °C of 10-65 Pa.s, preferably 15-50 Pa.s. and more preferably 15-45 Pa.s.

Preferably the second component of the powder coating composition of the present invention comprises an amorphous polyester having hydroxy functional groups, or a blend of two such polyesters. The polyester present in the second component of the powder coating composition is generally considered as a saturated and amorphous resin.

Suitable polyesters having hydroxy functional groups for use in the second component are available commercially. Representative examples of suitable polyesters having hydroxy functional groups include Uralac P 1625, Uralac P1675 and Uralac 1680 from Covestro AG. These polyesters, when used in the composition of the present invention, have the properties necessary to contribute to powder coating compositions having excellent weathering properties.

Suitable polyesters can also be prepared as commonly known in the art.

When the second component of the powder coating composition of the present invention comprises a polyester having carboxy functional groups, the polyester having carboxy groups is substantially free, e.g. free, of hydroxy groups. It is, however, possible that low levels of OH groups remain in the polymer due to the synthesis of the polymer. Such polymers herein are considered to be substantially free of hydroxy groups.

Preferably the polyester having carboxy functional groups has an AV of 15-50 mg KOH/g, and preferably 18-46 mg KOH/g.

Preferably the polyester having carboxy functional groups has an OHV of less than 5 mg KOH/g, more preferably less than 4 mg KOH/g, and still more preferably less than 3 mg OHV.

The second component of the powder coating composition of the present invention preferably comprises a polyester having carboxy functional groups having an having an AV of 15-50 mg KOH/g, and preferably 18-46 mg KOH/g, and an OHV of less than 5 mg KOH/g, more preferably less than 4 mg KOH/g, and still more preferably less than 3 mg OHV.

The second component of the powder coating composition of the present invention preferably comprises a polyester having carboxy functional groups with a glass transition temperature (Tg) above 30 °C, preferably above 40 °C, and more preferably 50-70 °C.

The second component of the powder coating composition preferably comprises a polyester having carboxy functional groups with a melt viscosity at 160 °C of 10-70 Pa.s., and more preferably 25-65 Pa.s.

Preferably the second component of the powder coating composition of the present invention comprises an amorphous polyester having carboxy functional groups. The polyester present in the second component of the powder coating composition is generally considered as a saturated and amorphous resin.

Suitable polyesters having carboxy functional groups for use in the second component are available commercially. Representative examples of suitable polyesters having carboxy functional groups include Uralac P 883 and Uralac P6800 from Covestro AG, Crylcoat 4679 from Allnex and Reafree 5709 from Arkema. These polyesters, when used in the composition of the present invention, have the properties necessary to contribute to powder coating compositions having excellent weathering properties.

Suitable polyesters can also be prepared as commonly known in the art.

The second component of the powder coating composition of the present invention preferably comprises 45-98 wt%, more preferably 50-97 wt% and still more preferably 51-96 wt % of hydroxy functionalised silicone with phenyl, or phenyl and methyl, substituents, based on the total weight of the second component.

The second component of the powder coating composition of the present invention preferably comprises 0-19 wt%, and more preferably 0-18 wt% of said polyester having carboxy functional groups and/or said polyester having hydroxy functional groups, based on the total weight of the second component.

In a preferred second component of the powder coating composition of the present invention the weight ratio of said hydroxy functionalised silicone(s) with phenyl, or phenyl and methyl, substituents to said polyester(s) having carboxy functional groups and/or having hydroxy functional groups in said second component is 100:0 to 75:25, and preferably 100:0 to 80:20.

The second component of the powder coating composition of the present invention preferably comprises 55-97 wt%, more preferably 58-96 wt% and still more preferably 59-96 wt% total amount of hydroxy functionalised silicone(s) with phenyl, or phenyl and methyl, substituents and polyester having hydroxy functional groups and/or polyester having carboxyl functional groups, based on the total weight of the second component.

When the second component of the powder coating composition of the present invention comprises a polyester having carboxyl and/or a polyester having hydroxy functional groups, the second component comprises a curing agent. The curing agent reacts with the above-mentioned polymer(s) during curing to form a coating, e.g. a film coating.

The curing agent present in the second component of the powder coating composition of the present invention is selected from blocked polyisocyanate curing agent, a beta-hydroxy alkyl amide (HAA) curing agent or a combination thereof, depending on the functional groups of the polyester.

Theoretically, TGIC could also be used to cure the carboxy groups of the polyester(s). However, as mentioned above, TGIC as a raw material is heavily labelled, and presents a health hazard for powder factory workers and hazards for the environment. Preferably, therefore, the curing agents present in the second component of the powder coating composition of the present invention is not TGIC.

The curing agent facilitates the provision of a coating composition with an acceptable cure time. The curing agent for the hydroxy groups of the polyester is a polyisocyanate curing agent. At elevated temperatures, the polyisocyanate curing agent reacts with the hydroxy groups of the polyester(s) and creates a crosslinked network in the coating film. Three main types of polyisocyanates are commonly used in the art: Internally blocked polyisocyanates, also referred to as blocking-free curing agents, blocked polyisocyantes and unblocked polyisocynates. In the second component of the powder coating composition of the present invention, the polyisocyanate curing agent is a blocked polyisocyanate. Unblocked polyisocyanates are undesirable as they are prone to react at lower temperatures and may become at least partly deactivated after the extrusion process.

Suitable blocked polyisocyanate curing agents are available commercially. Representative examples include blocked polyisocyanate curing agents like Vestagon B1530 from Evonik, ICASON1530 from Icason, Crelan UI and Crelan NW 5 from Covestro AG. Such polyisocyanate curing agents typically have equivalent weights in the range of 270 - 340 g/eq.

The curing agent for the carboxy groups present in the second component is preferably a beta-hydroxy alkyl amide (HAA). At elevated temperatures, the HAA curing agent reacts with the carboxy groups of the polyester(s) and creates a crosslinked network in the coating film.

Suitable commercially available β-hydroxy alkyl amides for use in the first component include N,N,N',N'-tetrakis(2-hydroxyethyl)adipamide sold under trade names Primid XL-552 from EMS-Primid, Megamid XL from Megara Resins or HH8080 from Huangshan Huahui Technology Co. Ltd, and N,N,N',N'-tetrakis(2-hydroxypropyl)apidamide sold under trade names Primid QM-1260 from EMS-Primid, or HH8260 from Huangshan Huahui Technology Co. Ltd. Typically, N,N,N',N'-tetrakis(2- hydroxyethyl)adipamide will have an OH value in the range of 620 - 720 mg KOH/g, and N,N,N',N'-tetrakis(2-hydroxypropyl)apidamide will have an OH value in the range of 550 - 600 mg KOH/g.

It will be appreciated that the curing agents and the polyester(s) need to react in order to cure the coating. The suitable amounts of curing agents and polyesters depends on the relative numbers of reactive groups, i.e. hydroxy-/carboxy groups in polyesters and isocyanate/hydroxy groups in the curing agents. It is preferred if the curing agents are present in the second component in a stoichiometric amount that is 80-120 %, more preferably 90-115 % and still more preferably 95-105 %, based on the number of reactive groups in the curing agents relative to the number of reactive groups present in the polyesters.

The second component of the powder coating composition of the present invention may comprises 0-16 wt%, and more preferably 0-15 wt% of a curing agent selected from a blocked polyisocyanate curing agent, a beta-hydroxy alkyl amide (HAA) curing agent, or a combination thereof, based on the total weight of the second component.

The second component of the powder coating composition of the present invention preferably comprises 0-16 wt%, more preferably 0-15 wt% and still more preferably 0-14 wt % blocked polyisocyanate curing agent, based on the total weight of the second component.

The second component of the powder coating composition of the present invention preferably comprises 0-5 wt%, more preferably 0-2 wt% and still more preferably 0-1 wt % HAA curing agent, based on the total weight of the first component.

Preferably the second component of the powder coating composition of the present invention does not comprise/is free of TGIC, i.e. comprises 0 wt% TGIC.

A preferred second component of the powder coating composition comprises a total amount of binder system, preferably a total amount of hydroxy functionalised silicone(s) with phenyl, or phenyl and methyl, substituents, and optionally polyester having hydroxy functional groups and a curing agent, of 65-97 wt%, more preferably 70-97 wt% and still more preferably 72-96 wt% based on the total weight of the second component.

*Ratios/amounts of first and second components*

In a preferred powder coating composition of the present invention the weight ratio of said first component to said second component is 60:40 to 40:60, more preferably 55:45 to 45:55, and still more preferably 50:50.

A preferred powder coating composition of the present invention comprises 64-90 wt%, more preferably 66-88 wt% and still more preferably 69-88 wt% binder system, based on the total weight of the composition.

In a preferred powder coating composition of the present invention the weight ratio of the total hydroxy functionalised silicone(s) with phenyl, or phenyl and methyl, substituents to the total polyester(s) having carboxy functional groups and/or having hydroxy functional groups is 41:59 to 65:35, preferably 41:59 to 62:38 and more preferably 42:58 to 60:40, based on the total composition.

A preferred powder coating composition of the present invention comprises 25-50 wt%, more preferably 25-49 wt% and still more preferably 25-48 wt% hydroxy functionalised silicone(s) with phenyl, or phenyl and methyl, substituents, based on the total weight of the composition.

A preferred powder coating composition of the present invention comprises 0-42 wt%, and more preferably 26-42 wt% polyester having carboxy functional groups, based on the total weight of the composition.

A preferred powder coating composition of the present invention comprises 0-30 wt%, and more preferably 0-10 wt% polyester having hydroxy functional groups, based on the total weight of the composition.

A preferred powder coating composition of the present invention comprises 22-47 wt% and more preferably 29-46 wt% of a polyester having carboxy functional groups and/or a polyester having hydroxy functional groups, based on the total weight of the composition.

A preferred powder coating composition of the present invention comprises 1-9 wt%, and more preferably 1-8 wt% curing agents, based on the total weight of the composition.

A preferred powder coating composition of the present invention comprises 0-9 wt%, more preferably 0-8 wt% blocked polyisocyanate curing agent, based on the total weight of the composition.

A preferred powder coating composition of the present invention comprises 0-2.5 wt%, more preferably 0-2.0 wt% HAA curing agent, based on the total weight of the composition.

*Other ingredients - first component*

In a preferred powder coating composition of the present invention, the first component does not comprise a polyfluoro alkyl substance (PFAS). This is highly beneficial because such compounds are "forever chemicals" and cause health and environmental problems. The present invention is advantageous because it provides coatings without PFAS, but which still provide ultra weather durability performance. Usually PFASs are required to provide ultra weather durability.

Also, the compositions are preferably free of TGIC.

Colour pigment

In a preferred powder coating composition of the present invention, the first component comprises colour pigments.

If present, the first component of the coating composition of the present invention may comprise a single colour pigment or a combination of two or more colour pigments. In a preferred powder coating composition of the present invention the first component comprises at least one colour pigment.

The colour pigment may be inorganic, including e.g. $TiO_2$, organic colour pigment including, e.g. carbon black, or combinations thereof. If present, preferably the colour pigment is an inorganic pigment.

Representative examples of suitable inorganic colour pigments for inclusion in the first component of the coating composition of the present invention include titanium dioxide, pigment blue 28, pigment black 11, pigment brown 24, pigment yellow 42, pigment yellow 119, pigment yellow 184, pigment red 101, pigment green 17, and combinations thereof. The pigments are listed according to their colour index, commonly used in the field. Inorganic effect pigments such as coated aluminium or pearlescent pigments may also be present in the first component.

Representative examples of suitable organic pigments for inclusion in the first component of the coating composition of the present invention include pigment blue 15, pigment green 7, pigment green 36, pigment red 122, pigment red 254, pigment yellow 110, pigment yellow 139, and combinations thereof.

Representative examples of suitable carbon black pigments for inclusion in the first component of the coating composition of the present invention include e.g. pigment black 7.

Suitable colour pigments are commercially available, e.g. Bayferrox Red 130 M, Bayferrox Yellow 1420 M, and COLORTHERM YELLOW 3950 from LANXESS Deutschland GmbH, Tipaque PF105 from Ishihara Sangyo Kaisha ltd, TI-PURE R-960 from Chemours International Operations Sarl., Sudafast Green 2730 K from Sudarshan Chemical Industries Ltd. and MONARCH 800 from Cabot Corporation.

Colour pigments are preferably included in the first component of the coating composition in the minimum amount necessary to give the desired colour. The amount of colour pigment required, in part, depends on the type of colour pigment. By way of example, $TiO_2$ might be present in 2.3 wt%, pigment red 101 might be present in 7.3 wt%, pigment yellow 42 in 1.3 wt% and pigment black 7 in 0.1 wt%, based on the weight of the first component. The skilled person will be able to determine suitable amounts for different types of pigments.

The amount of colour pigment present in the first component of the coating composition of the present invention is preferably 0-35 wt%, and more preferably 4-33 wt%, based on the total weight of the first component.

Filler

In a preferred powder coating composition of the present invention, the first component comprises filler.

Preferred fillers, if present, in the first component of the coating composition are inorganic fillers. Commonly used inorganic fillers for weather resistant coating compositions include feldspar, barium sulphate, wollastonite, nepheline syenite, calcined kaolin, aluminium hydroxide, also referred to as ATH, and mixtures thereof.

Suitable inorganic filler particles exist in different forms, e.g. spherical, lamellar, nodular and irregular. The fillers, if present, in the first component of the coating composition of the present invention preferably have a mean or average particle size, $D_{50}$, of 0.5 to 25 $\mu$m, preferably 1 to 20 $\mu$m.

In the first component of the coating composition of the present invention the filler is preferably selected from barium sulphate, preferably natural barium sulphate, nepheline syenite, feldspar, aluminium hydroxide and mixtures thereof and more preferably barium sulphate, preferably natural barium sulphate.

The first component of the coating composition of the present invention may comprise a single filler or a combination of two or more fillers. In one preferred first component of the coating composition, a single filler is present. When a single filler is present, the filler is preferably natural barium sulphate. In another preferred first component of the coating composition, combinations of two or more fillers are preferred. Representative examples of some preferred combinations include natural barium sulphate and feldspar, natural barium sulphate and nepheline syenite, and natural barium sulphate and aluminium hydroxide.

Suitable fillers are available commercially. Representative examples of suitable fillers include Blanc Fixe HD-80 from Solvay Chimica Italia Spa, Blanc Fine GM-80 from Gemme Speciality Chemicals Co., Ltd, Alfrimal 444 S from Alpha Calcit Fullstoff Gesellschaft mbH & Co. KG, BariStar 8825 from Minerals Gerona S.A., Unibrite NB 45 from Sibelco China, Airwhite AW 5 from Yongan Viaton Minerals Co.Ltd, Feldspar PR C-2 from Kaltun Mining Company or Fordagard M10B from LKAB Minerals B.V.

The total amount of filler present in the first component of the coating composition of the present invention is preferably 0-30 wt%, more preferably 0-15 wt% and still more preferably 0-5 wt%, based on the total weight of the first component.

Levelling agent

In a preferred powder coating composition of the present invention the first component comprises a levelling agent, also known as flow agent, flow additive, flow control additive, or levelling additive. The presence of a levelling agent tends to increase surface smoothness, e.g. by reducing or eliminating surface imperfections such as craters, fish-eyes and pinholes. This is achieved by improving the melt-flow characteristics of the powder coating composition.

The first component of the coating composition of the present invention may comprise a single levelling agent or a combination of two or more levelling agents. Representative examples of suitable levelling agents that may be present in the first component include polyacrylates/polyacrylic resins, and silicon containing compounds. A preferred first component of the coating composition of the invention comprises a levelling agent, which is a polyacrylic resin absorbed on a silica carrier.

Conventional, commercially available, levelling agents may be used, e.g. Reacrone PCL-100N from KSCNT Co. Ltd, Rheoflow PLP 100H(A) from KS Chemical Co. Ltd, Resiflow PV 88 from Worlée-Chemie GmbH and Modaflow Powder 6000 from Allnex USA Inc., BYK-LP G 24162 from BYK-Chemie GmbH.

In a preferred powder coating composition of the present invention the first component comprises 0.5-2 wt%, more preferably 0.7-1.7 wt% levelling agent, based on the total weight of the first component.

Degassing agent

In a preferred powder coating composition of the present invention the first component comprises a degassing agent. Conventional, commercially available, degassing agents may be used.

Representative examples of suitable degassing agents that may be present in the first component include cyclohexane dimethanol bisbenzoate, benzoin, benzoin derivatives, and mixtures thereof. Preferably the degassing agent is benzoin or a benzoin derivative, and particularly preferably benzoin.

Suitable degassing agents are available from a wide range of commercial suppliers, e.g. benzoin is available under the tradename Miwon benzoin from Miwon Speciality Chemical Co. Ltd, and as Benzoin from Orgamine Chemicals PVT Ltd, and Ningbo South Sea Chemical Co. Ltd.

In a preferred powder coating composition of the present invention the first component comprises 0.1-1.0 wt%, and more preferably 0.2-0.8 wt% degassing agent, based on the total weight of the first component.

Other additives

The first component of the coating composition of the invention optionally comprises one or more other additives. Examples of other additives that are optionally present in the first component of the composition of the invention include dispersion agents, adhesion promoters, waxes, antioxidants, rheology additives, UV/HALS (Hindered Amine Light Stabilizers) additives, matting agents and surface modifying agents.

UV absorbers are organic molecules that improves coating resistance against photo-oxidation process by typically absorbing or filtering UV light radiation that is harmful to polymers. UV absorbers used in this application include hydroxylphenyl-s-triazine type and benzotriazole type. HALS and antioxidants are free radical scavengers that stabilize the coating when radicals are generated due to UV or heat radiation by slowing down polymer degradation via chain radical reactions. Examples of HALS used in this application include oligomeric tetramethyl piperidine derivatives, and antioxidants include sterically hindered phenols.

Suitable UV stabilizers (UV absorbers and HALS) are available from a wide range of commercial suppliers, e.g. Eversorb 76, Eversorb 91 FD and Everaox B900 from Everlight Chemical Industrial Corporation, Tinuvin 405 and Tinuvin 622 FS from

BASF SE.

Suitable dispersion promoters are commercially available e.g. BYK 3950 and BYK 3951 from BYK-Chemie GmbH.

Additional additives are preferably present in the first component in an amount of 0 - 6 wt%, more preferably 1-5 wt%, still more preferably 1-4 wt%, based on the total weight of the first component. By way of examples UV stabilizing agents may be present in 0-1.3 wt%, based on the total weight of the first component, while dispersion agents may be present 0-1.3 wt%, based on the total weight of the first component.

In a preferred powder coating composition of the invention, the first component has a $D_{50}$ of 15-70 microns, more preferably 25-60 microns, and still more preferably 30-45 microns, as determined by ISO 22412:2017 using a Malvern Mastersizer 3000.

*Other ingredients - second component*

The other ingredients present in the second component may be the same or different to the other ingredients present in the first component. When different, the other ingredients may be different in type and/or amount.

In a preferred powder coating composition of the present invention, said second component does not comprise a polyfluoro alkyl substance (PFAS). This is highly beneficial because, such compounds are "forever chemicals" and cause health and environmental problems. The present invention is advantageous because it provides coatings without PFAS, but which still provide ultra weather durability performance. Usually, PFAS are required to provide ultra weather durability.

Also, the compositions are preferably free of TGIC.

UV stabilizing agent

In a preferred powder coating composition of the present invention the second component comprises at least one UV stabilizing agent.

UV absorbers are organic molecules that improves coating resistance against photo-oxidation process by typically absorbing or filtering UV light radiation that is harmful to polymers. UV absorbers used in this application include hydroxylphenyl-s-triazine type and benzotriazole type. HALS and antioxidants are free radical scavengers that stabilize the coating when radicals are generated due to UV or heat radiation by slowing down polymer degradation via chain radical reactions. Examples of HALS used in this application include oligomeric tetramethyl piperidine derivative, and anti-oxidants include sterically hindered phenols.

Suitable UV stabilizers (UV absorbers and HALS) are available from a wide range of commercial suppliers, e.g. Eversorb 76, Eversorb 91 FD and Everaox B900 from Everlight Chemical Industrial Corporation, Tinuvin 405 and Tinuvin 622 FS from

BASF SE.

In a preferred powder coating composition of the present invention the second component comprises 0-2.5 wt%, more preferably 1.0-2.3 wt% UV stabilizers, and still more preferably 1.2-2.0, based on the total weight of the second component.

Levelling agent

In a preferred powder coating composition of the present invention the second component comprises a levelling agent, also known as flow agent, flow additive, flow control additive, or levelling additive. The presence of a levelling agent tends to increase surface smoothness, e.g. by reducing or eliminating surface imperfections such as craters, fish-eyes and pinholes. This is achieved by improving the melt-flow characteristics of the powder coating composition.

The second component of the coating composition of the present invention may comprise a single levelling agent or a combination of two or more levelling agents. Representative examples of suitable levelling agents that may be present in the second component include polyacrylates/polyacrylic resins, and silicon containing compounds. A preferred second component of the coating composition of the invention comprise a levelling agent, which is a polyacrylic resin absorbed on a silica carrier.

Conventional, commercially available, leveling agents may be used, e.g. Reacrone PCL-100N from KSCNT Co. Ltd, Rheoflow PLP 100H(A) from KS Chemical Co. Ltd, Resiflow PV 88 from Worlée-Chemie GmbH and Modaflow Powder 6000 from Allnex USA Inc.. BYK-LP 22089, BYK-LP X 22737 from BYK-Chemie GmbH.

In a preferred powder coating composition of the present invention the second component comprises 0.8-2.4 wt%, more preferably 1-2.2 wt% levelling agent, based on the total weight of the second component.

Colour pigment

In a preferred powder coating composition of the present invention the second component may comprises at least one colour pigment. If colour pigments are present the second component of the coating composition of the present invention may comprise a single colour pigment or a combination of two or more colour pigments.

The colour pigment may be inorganic, organic, carbon black colour pigment or combinations thereof. Preferably the colour pigment is an inorganic pigment, if present.

Representative examples of suitable inorganic colour pigments, if present, for inclusion in the second component of the coating composition of the present invention include titanium dioxide, pigment blue 28, pigment black 7, pigment yellow 42, pigment yellow 119, pigment red 101, pigment green 17, and combinations thereof. The pigments are listed according to their colour index, commonly used in the field. Inorganic effect pigments such as coated aluminium or pearlescent pigments may also be included.

Representative examples of suitable organic pigments for inclusion in the second component of the coating composition of the present invention include pigment blue 15, pigment green 7, pigment green 36, pigment red 122, pigment red 254, pigment yellow 110, pigment yellow 139, and combinations thereof.

Representative examples of suitable carbon black pigments for inclusion in the second component of the coating composition of the present invention include pigment black 7.

Suitable colour pigments are commercially available, e.g. Bayferrox Red 130 M, Bayferrox Yellow 1420M, and COLORTHERM YELLOW 3950 from LANXESS Deutschland GmbH, Tipaques PF105 from Ishihara Sangyo Kaisha ltd, TI-PURE R-960 from Chemours International Operations Sarl., Sudafast Green 2730 K from Sudarshan Chemical Industries Ltd. and MONARCH 800 from Cabot Corporation.

Colour pigments are preferably included in the second component of the coating composition in the minimum amount necessary to give the desired colour. The amount of colour pigment required, in part, depends on the type of colour pigment. By way of example, $TiO_2$ might be present in 0.8 wt%, pigment red 101 might be present in 2.6 wt%, pigment yellow 119 in 1.3 wt% and pigment black 7 in 0.4 wt%, based on the weight of the second component. The skilled person will be able to determine suitable amounts for different types of pigments.

The amount of colour pigment present in the second component of the coating composition of the present invention is preferably 0-30 wt%, more preferably 0-28 wt%, and still more preferably 0-23 wt%, based on the total weight of the second component.

Filler

In a powder coating composition of the present invention, the second component may comprise a filler.

Preferred fillers, if present, in the second component of the coating composition are inorganic fillers. Commonly used inorganic fillers for weather resistant coating compositions may include feldspar, barium sulphate, wollastonite, nepheline syenite, calcined kaolin, aluminium hydroxide, also referred to as ATH, and mixtures thereof.

Suitable inorganic filler particles exist in different forms, e.g. spherical, lamellar, nodular and irregular. The fillers, if present, in the second component of the coating composition of the present invention preferably have a mean or average particle size, $D_{50}$, of 0.5 to 25 mm, preferably 1 to 20 mm.

In the second component of the coating composition of the present invention the filler is preferably selected from barium sulphate, preferably natural barium sulphate, nepheline syenite, feldspar, aluminium hydroxide and mixtures thereof and more preferably barium sulphate, preferably natural barium sulphate.

The second component of the coating composition of the present invention may comprise a single filler or a combination of two or more fillers. In one preferred second component of the coating composition, a single filler is present. When a single filler is present, the filler is preferably natural barium sulphate. In another preferred second component of the coating composition, combinations of two or more fillers are preferred. Representative examples of some preferred combinations include natural barium sulphate and feldspar, natural barium sulphate and nepheline syenite, and natural barium sulphate and aluminium hydroxide.

Suitable fillers are available commercially. Representative examples of suitable fillers include Blanc Fine GM-80 from Gemme Speciality Chemicals Co. Ltd, BariStar 8825 from Minerals Gerona S.A., Unibrite NB 45 from Sibelco China, Airwhite AW 5 from Yongan Viaton Minerals Co.Ltd, Feldspar PR C-2 from Kaltun Mining Company or Fordagard M10B from LKAB Minerals B.V.

The total amount of filler present in the second component of the coating composition of the present invention is preferably 0-30 wt%, more preferably 0-15 wt%, and still more preferably 0-5 wt% based on the total weight of the second component.

Accelerator

The second component of the coating composition of the present invention may comprise an accelerator for curing of hydroxy functionalised silicone(s) with phenyl, or phenyl and methyl, substituents at lower temperature.

Suitable accelerators are available commercially, e.g. zinc (II) acetylacetonate from Merck Life Science AS.

The total amount of accelerator present in the second component of the coating composition of the present invention is preferably 0-1 wt%, more preferably 0-0.8 wt%, and still more preferably 0-0.7 wt% based on the total weight of the second component.

Degassing agent

In a powder coating composition of the present invention, the second component may comprise a degassing agent. Conventional, commercially available, degassing agents may be used.

Representative examples of suitable degassing agent that may be present in the second component include cyclohexane dimethanol bisbenzoate, benzoin, benzoin derivatives, and mixtures thereof. Preferably the degassing agent is benzoin or a benzoin derivative, and particularly preferably benzoin.

Suitable degassing agents are available from a wide range of commercial suppliers, e.g. benzoin is available under the tradename Miwon benzoin from Miwon Speciality Chemical Co. Ltd, and as Benzoin from Orgamine Chemicals PVT Ltd, and Ningbo South Sea Chemical Co. Ltd.

In a preferred powder coating composition of the present invention the second component comprises 0-1.4 wt%, more preferably 0-1.3 wt% degassing agent, based on the total weight of the second component.

Other additives

The second component of the coating composition of the invention optionally comprises one or more other additives. Examples of other additives that are optionally present in the second component of the composition of the invention include dispersion agents, adhesion promoters, waxes, antioxidants, matting agents and surface modifying agents.

Additional additives are preferably present in the second component in an amount of 0-1.3 wt%, more preferably 0-1.1 wt%, based on the total weight of the second component. By way of examples wetting agents may be present 0-1.1 wt%, based on the total weight of the second component.

In a preferred powder coating composition of the invention, the second component has a $D_{50}$ of 15-70 microns, more preferred 25-60 microns, still more preferably 30-45 microns, as determined by ISO 22412:2017 using a Malvern Mastersizer 3000.

*Two-component coating composition*

The total amount of UV stabilisers present in the powder coating composition of the present invention is preferably 0-2.5 wt%, more preferably 0-2.2 wt% and still more preferably 0-1.6wt%, based on the total weight of the coating composition.

The total amount of colour pigments and filler(s) present in the coating composition of the present invention is preferably 0-33 wt%, more preferably 7-30 wt%, and still more preferably 7-28 wt% based on the total weight of the coating composition. If high amounts of colour pigments are used, the filler amount is typically reduced, or even lacking. The colour pigments and fillers are normally distributed mainly, or only, in the first component. However, in some compositions, this distribution may be modified.

The total amount of degassing agent present in the powder coating composition of the present invention is preferably 0.2-1.7 wt%, more preferably 0.2-1.0 wt% and still more preferably 0.2-0.8 wt%, based on the total weight of the coating composition.

The total amount of levelling agent present in the powder coating composition of the present invention is preferably 0.8-1.8 wt%, more preferably 0.9-1.8 wt% and still more preferably 0.9-1.6 wt%, based on the total weight of the composition.

The total amount of other additives such as e.g. dispersion agents, adhesion promoters, waxes, antioxidants, matting agents and surface modifying agents if present in the powder coating composition of the present invention is preferably 1.0-5.0 wt%, preferably 1.1-4.5 wt% and more preferably 1.1-4.2 wt% other additives, based on the total weight of the composition.

A preferred powder coating composition of the invention has a $D_{50}$ of 15-70 microns, more preferred 25-60 microns, still more preferably 30-45 microns, as determined by ISO 22412:2017 using a Malvern Mastersizer 3000.

A preferred powder coating composition of the present invention is free flowing. Preferably the coating composition has a PCI of 1-6, and more preferably 1-3.

A preferred powder coating composition of the present invention is thermosetting.

A preferred powder coating composition of the present invention provides a coating having a gloss retention of at least 50 %, as tested by the Hybrid Exposure System described herein, of at least 200 hrs, more preferably at least 250 hrs, still more preferably at least 300 hrs and yet more preferably at least 500 hrs.

A preferred powder coating composition of the present invention provides a dry adhesion, as tested by ISO 2409, of less than 2, preferably less than 1 and more preferably 0.

One preferred two-component powder coating composition of the present invention comprises:

(i) a first component comprising:

(a) a polyester having carboxy functional groups and/or a polyester having hydroxy functional groups;
(b) a curing agent for the polyester (a) selected from a blocked polyisocyanate curing agent, a beta-hydroxy alkyl amide (HAA) curing agent, or a combination thereof; and
(c) optionally a hydroxy functionalised silicone with phenyl, or phenyl and methyl, substituents;

and

(ii) a second component comprising:

(a) a hydroxy functionalised silicone with phenyl, or phenyl and methyl, substituents; and
(b) optionally a polyester having carboxy functional groups and/or a polyester having hydroxy functional groups; and
(c) a curing agent for the polyester (b), if present selected from a blocked polyisocyanate curing agent, a beta-hydroxy alkyl amide (HAA) curing agent, or a combination thereof;

wherein the first component and the second component are different, and the weight ratio of silicone to polyester is above 40:60, preferably 41:59 to 65:35, based on the total composition.

One preferred two-component powder coating composition of the present invention comprises:

(i) a first component comprising:

(a) 50-90 wt% of a polyester having carboxy functional groups and/or a polyester having hydroxy functional groups;
(b) 1-11 wt% of a curing agent for the polyester (a) selected from a blocked polyisocyanate curing agent, a beta-hydroxy alkyl amide (HAA) curing agent, or a combination thereof; and
(c) optionally 0-15 wt% of a hydroxy functionalised silicone with phenyl, or phenyl and methyl, substituents, each based on the total weight of the first component;

and

(ii) a second component comprising:

(a) 45-98 wt% of a hydroxy functionalised silicone with phenyl, or phenyl and methyl, substituents; and
(b) optionally 0-19 wt% a polyester having carboxy functional groups and/or a polyester having hydroxy functional groups; and
(c) 0-16 wt% of a curing agent for the polyester (b), if present selected from a blocked polyisocyanate curing agent, a beta-hydroxy alkyl amide (HAA) curing agent, or a combination thereof, each based on the total weight of the second component;

wherein the first component and the second component are different, and the weight ratio of silicone to polyester is above 40:60, preferably 41:59 to 65:35, based on the total composition.

One preferred two-component coating composition of the present invention comprises:

(i) a first component comprising:

(a) a polyester having carboxy functional groups and/or a polyester having hydroxy functional groups;
(b) a curing agent for the polyester (a) selected from a blocked polyisocyanate curing agent, a beta-hydroxy alkyl amide (HAA) curing agent, or a combination thereof;
(c) optionally a hydroxy functionalised silicone with phenyl, or phenyl and methyl, substituents;
(d) a leveling agent;
(e) a pigment; and
(f) a degassing agent, preferably benzoin;

and

(ii) a second component comprising:

(a) a hydroxy functionalised silicone with phenyl, or phenyl and methyl, substituents;
(b) optionally a polyester having hydroxyl functional groups;

(c) a curing agent for the polyester (b), if present selected from a blocked polyisocyanate curing agent, a beta-hydroxy alkyl amide (HAA) curing agent, or a combination thereof;
(d) a flow agent; and
(e) an UV stabilizing agent

wherein the first component and the second component are different, and the weight ratio of silicone to polyester is above 40:60, preferably 41:59 to 65:35, based on the total composition.

One preferred two-component coating composition of the present invention comprises:

(i) a first component comprising:

(a) 50-90 wt% of a polyester having carboxy functional groups and/or a polyester having hydroxy functional groups;
(b) 1-11 wt% of a curing agent for the polyester (a) selected from a blocked polyisocyanate curing agent, a beta-hydroxy alkyl amide (HAA) curing agent, or a combination thereof;
(c) optionally 0-15 wt% of a hydroxy functionalised silicone with phenyl, or phenyl and methyl, substituents, each based on the total weight of the first component;
(d) a leveling agent;
(e) a pigment; and
(f) a degassing agent, preferably benzoin;

and

(ii) a second component comprising:

(a) 45-98 wt% of a hydroxy functionalised silicone with phenyl, or phenyl and methyl, substituents;
(b) optionally 0-19 wt% of a polyester having hydroxyl functional groups;
(c) 0-16 wt% of a curing agent for the polyester (b), if present selected from a blocked polyisocyanate curing agent, a beta-hydroxy alkyl amide (HAA) curing agent, or a combination thereof, each based on the total weight of the second component;
(d) a flow agent; and
(e) an UV stabilizing agent

wherein the first component and the second component are different, and the weight ratio of silicone to polyester is above 40:60, preferably 41:59 to 65:35, based on the total composition.

One preferred two-component powder coating composition of the present invention comprises:

(i) a first component comprising:

(a) 55-86 wt% of a polyester having carboxy functional groups and/or a polyester having hydroxy functional groups;
(b) 1-10.5 wt% of a curing agent for the polyester (a) selected from a blocked polyisocyanate curing agent, a beta-hydroxy alkyl amide (HAA) curing agent, or a combination thereof; and
(c) optionally 0-13 wt% of a hydroxy functionalised silicone with phenyl, or phenyl and methyl, substituents, each based on the total weight of the first component;

and

(ii) a second component comprising:

(a) 50-97 wt% of a hydroxy functionalised silicone with phenyl, or phenyl and methyl, substituents; and
(b) optionally 0-18 wt% a polyester having carboxy functional groups and/or a polyester having hydroxy functional groups; and
(c) 0-15 wt% of a curing agent for the polyester (b), if present selected from a blocked polyisocyanate curing agent, a beta-hydroxy alkyl amide (HAA) curing agent, or a combination thereof, each based on the total weight of the second component;

wherein the first component and the second component are different, and the weight ratio of silicone to polyester is above 40:60, preferably 41:59 to 65:35, based on the total composition.

One preferred two-component powder coating composition of the present invention comprises:

(i) a first component comprising:

(a) 55-83 wt% of a polyester having carboxy functional groups and/or a polyester having hydroxy functional groups;
(b) 1.7-10.2 wt% of a curing agent for the polyester (a) selected from a blocked polyisocyanate curing agent, a beta-hydroxy alkyl amide (HAA) curing agent, or a combination thereof; and
(c) optionally 0-12 wt% of a hydroxy functionalised silicone with phenyl, or phenyl and methyl, substituents, each based on the total weight of the first component;

and

(ii) a second component comprising:

(a) 51-96 wt% of a hydroxy functionalised silicone with phenyl, or phenyl and methyl, substituents; and
(b) optionally 0-18 wt% a polyester having carboxy functional groups and/or a polyester having hydroxy functional groups; and
(c) 0-14 wt% of a curing agent for the polyester (b), if present selected from a blocked polyisocyanate curing agent, a beta-hydroxy alkyl amide (HAA) curing agent, or a combination thereof, each based on the total weight of the second component;

wherein the first component and the second component are different, and the weight ratio of silicone to polyester is above 40:60, preferably 41:59 to 65:35, based on the total composition.

One preferred two-component powder coating composition of the present invention comprises:

(i) a first component comprising:

(a) a polyester having carboxy functional groups;
(b) a HAA curing agent for the polyester (a); and
(c) optionally a hydroxy functionalised silicone with phenyl, or phenyl and methyl, substituents;

and

(ii) a second component comprising:

(a) a hydroxy functionalised silicone with phenyl, or phenyl and methyl, substituents; and
(b) optionally a polyester having hydroxy functional groups; and
(c) a blocked isocyanate curing agent for the polyester (b), if present;

wherein the first component and the second component are different, and the weight ratio of silicone to polyester is above 40:60, preferably 41:59 to 65:35, based on the total composition.

One preferred two-component powder coating composition of the present invention comprises:

(i) a first component comprising:

(a) 63-75 wt% of a polyester having carboxy functional groups;
(b) 1-3 wt% of a curing agent for the polyester (a) selected from a beta-hydroxy alkyl amide (HAA) curing agent; and
(c) optionally 0-8 wt% of a hydroxy functionalised silicone with phenyl, or phenyl and methyl, substituents, each based on the total weight of the first component;

and

(ii) a second component comprising:

(a) 53-71 wt% of a hydroxy functionalised silicone with phenyl, or phenyl and methyl, substituents; and
(b) 4-18 wt% a polyester having hydroxy functional groups; and
(c) 3-14 wt% of a curing agent for the polyester (b) selected from a blocked polyisocyanate curing agent, each based on the total weight of the second component; wherein the first component and the second component are different, and the weight ratio of silicone to polyester is above 40:60, preferably 41:59 to 50:50, based on the total composition.

Containers and kits

The present invention also relates to a container containing a powder coating composition as hereinbefore described. Suitable containers include cardboard boxes, plastic bags, cans and drums.

Alternatively, the powder coating composition of the present invention may be provided in the form of a kit. A kit for preparing a powder coating composition as hereinbefore described comprises:

(i) a first container containing a first component comprising:

(a) a polyester having carboxy functional groups and/or a polyester having hydroxy functional groups;
(b) a curing agent for said polyester (a) selected from a blocked polyisocyanate curing agent, a beta-hydroxy alkyl amide (HAA) curing agent, or a combination thereof; and
(c) optionally, a hydroxy functionalised silicone with phenyl, or phenyl and methyl, substituents;

and
(ii) a second container containing a second component comprising:

(a) a hydroxy functionalised silicone with phenyl, or phenyl and methyl, substituents;
(b) optionally a polyester having carboxy functional groups and/or a polyester having hydroxy functional groups;
(c) a curing agent for said polyester (b), if present, selected from a blocked polyisocyanate curing agent, a beta-hydroxy alkyl amide (HAA) curing agent, or a combination thereof.

Preferably UV stabiliser is present in the first and second containers. Preferably degassing agent is present in the first and second containers. Preferably flow additive is present in the first and second containers.

Preferably at least one colour pigment is present in the first and second containers. Preferably filler is present in the first and second containers.

Optionally, kits further comprise instructions for preparing the two-component power coating composition of the present invention.

Manufacture

The present invention also relates to a method of making a two-component powder coating composition as hereinbefore described comprising:

(i) preparing a first component by mixing:

(a) a polyester having carboxy functional groups and/or a polyester having hydroxy functional groups;
(b) a curing agent for said polyester (a) selected from a blocked polyisocyanate curing agent, a beta-hydroxy alkyl amide (HAA) curing agent, or a combination thereof; and
(c) optionally, a hydroxy functionalised silicone with phenyl, or phenyl and methyl, substituents;

and
(ii) preparing a second component by mixing:

(a) a hydroxy functionalised silicone with phenyl, or phenyl and methyl, substituents;
(b) optionally a polyester having carboxy functional groups and/or a polyester having hydroxy functional groups;
(c) a curing agent for said polyester (b), if present, selected from a blocked polyisocyanate curing agent, a beta-hydroxy alkyl amide (HAA) curing agent, or a combination thereof.

A preferred method further comprises blending said first and second components.

A preferred method of the invention comprises preparing a first component by mixing, melt dispersing, cooling and optionally grinding. Another preferred method of the invention comprises preparing a second component by mixing, melt dispersing, cooling and optionally grinding. In some preferred methods of the invention, the first and second components are combined prior to grinding and are therefore ground together. In other preferred methods of the invention, the first and second components are combined after grinding.

Traditionally, powder coatings have been made by first weighing and mixing together a mixture of binders and curing agents, pigments, and optionally fillers and additives, to obtain a homogenous premix. The premix is then traditionally melted, mixed and dispersed in a single screw or a twin screw extruder into a homogenous melted mixture.

The melted mixture is then cooled, tableted and broken. The crushed materials are then traditionally grinded in an impact classifying mill or an air classifying mill to obtain the desired particle size distribution of the powder coating. A free flow additive is traditionally added towards the end of the production process to assist in the milling step and enhance fluidization during the application process.

In the case of two-component powder coatings, the two components can be processed fully separately as described above, and then dry blended together in a mixer to obtain the two-component mix as one powder. Alternatively, the two components can be produced separately to and including the extrusion step, and then blended and processed together from the grinding step and onwards.

Thus in one preferred method the first and second components are each extruded and grinded separately before blending. In other preferred method, the first and second components are separately extruded and blended prior to grinding. In another preferred method the fist and the second components are not blended.

Coatings and applications

The present invention also relates to a method of coating a substrate. The powder coating compositions are either applied on a substrate as a mixture of the (dryblended) two-component composition or sprayed separately one component after the other of the two-component composition, usually referred to as dry-on-dry, before curing.

The present invention therefore relates to a method of coating a substrate, preferably a metal substrate, with a two-component powder coating composition as hereinbefore described, comprising:

mixing said first component and said second component to produce a powder blend;
applying said powder blend to at least one surface of said substrate; and curing said powder blend to produce said coating.

The present invention further relates to a method of coating a substrate, preferably a metal substrate, with a two-component powder coating composition as hereinbefore described, comprising:

applying said first component to at least one surface of said substrate to produce a layer of first component;
applying said second component to said layer of first component to produce a layer of second component; and
curing said layers to produce said coating.

The first and second components or the overall powder coating composition of the invention may be applied to a substrate, preferably a metal substrate, by any conventional powder coating method such as spraying or via a fluidised bed. Spraying, e.g. electrostatically, is preferred. Triboelectric or corona charge electrostatic spray guns may be used. After powder application on the substrate, the powder is oven cured at elevated temperature. Coating techniques are well known in the art and will be familiar to the skilled person.

To form the final cured powder coating film, the substrate with powder coating sprayed onto is traditionally heated to temperatures above the reaction initiation temperature of the chosen powder coating composition for a time long enough for the coating to form a fully crosslinked network. In other words, once a substrate is coated with the powder coating composition of the invention, the coating is preferably cured. Heat or thermal curing is preferred. The coated substrate may be cured in a conventional convection oven, an IR/convection combination oven, a convection/induction oven or a convection/induction/IR oven. Where heating is used for curing, the curing temperature is preferably in the range 160 to 230 °C, e.g. 160 to 220 °C or e.g. 180 to 200 °C. Advantageously the powder coating composition of the invention can be cured in short cycles, e.g. 10 minutes at 200 °C.

The powder coating composition is preferably well flowing during the curing process. Advantageously this leads to smooth, even finishes.

The film thickness of the cured coating is typically 20 to 200 microns, preferably 50 to 100 microns and especially 60 to 80 microns.

Substrate and Articles

The present invention also relates to a coating, preferably a cured coating, comprising a two-component powder coating, as hereinbefore described. Alternatively viewed the present invention relates to a coating obtainable by spraying and curing a two-component powder coating composition as hereinbefore described.

The powder coating composition of the present invention may be used to form a single layer coating or used on top of a primer to form a top coat. Preferably, however, the powder coating composition of the invention is used to form the top coating layer employed on a metal substrate. Preferably therefore the coating is a top coat. Optionally the coating further comprises an underlying primer coat.

The present invention also relates to a substrate, preferably a metal substrate, coated with a two-component powder coating composition or coating as hereinbefore described. The powder coating composition of the invention may be applied to metal substrates. Representative examples of substrates include e.g. steel, galvanized steel, aluminium. A preferred substrate is a metal substrate. The substrates may ultimately be for interior or exterior use, but many of the advantages of the invention are particularly important for exterior use.

The substrate may be partially or completely coated with the powder composition or coating of the invention. In some cases, for example, only the top surface of the substrate is coated. In other cases all surfaces of the substrate are preferred coated. Preferably the substrate is at least part of a surface of an article.

The present invention shows that fluoro-polymers, such as PFAS, can be omitted as part of the binder system in powder coatings compositions without impacting on the powerful performance of ultra weather durable coatings in weathering, corrosion, humidity, surface abrasion, and wet and dry adhesion. These properties make the coatings of the present invention suitable for architectural purposes, including use in the building component industry. The coatings of the present invention comply with third party industry standards, like for example the AAMA 2605 and Qualicoat class 3 standards. Examples of application areas for the powder coating composition of the present invention include façade panels, claddings, metal frames, windows, handrails, curtain walls, louvers, roofing and space frames.

The invention will now be described with reference to the following non-limiting examples.

EXAMPLES

All the ingredients used in the examples and comparable examples were commercially available. The ingredients are summarised in Table 1 below.

Table 1

| Name | Purpose of ingredient in composition | Properties |
|---|---|---|
| Silicone 1 | Hydroxyl functionalized polysiloxane with phenyl substitution | Tg > 55 °C, OH content 4.5-6.5% (corresponding to OHV 1.6 - 2.4 mg KOH/g). Molecular weight (Mw) approx. 1500. Silicone content 100 %. |
| Silicone 2 | Hydroxyl functionalized polysiloxane with 1:1 methyl/phenyl substitution | Tg > 48 °C, OH content 3.5-7% (corresponding to OHV 0.7- 1.6 mg KOH/g). Molecular weight (Mw) approx. 2600. Silicone content 100% |
| Silicone 3 | Hydroxyl functionalized polysiloxane with 2.7:1 phenyl/propyl substitution | Tg =48 °C, OHV 2.5-7 mg KOH/g. Molecular weight (Mw) 1500-2500, Silicone content 100% |
| Silicone 4 | Hydroxyl functionalized siloxane-modified saturated polyester | Tg =48 °C, OHV 40-50 mg KOH/g. Silicone content 30-50 % |
| Fluoro-polymer | Hydroxyl functionalized fluoroethylene and alkyl vinyl ether segments (FEVE) resin | Tg =55 °C, OHV 40-52 mg KOH/g |
| Polyester 1 | Saturated carboxylated polyester | Tg =63 °C, AV 18-22 mg KOH/g, viscosity of 13 Pa.s at 170 °C (36-57 Pa.s, at 160 °C) |
| Polyester 2 | Saturated carboxylated polyester | Tg =64 °C, AV 41-46 mg KOH/g, viscosity of 25-65 Pa.s at 160 °C) |
| Polyester 3 | Saturated hydroxylated polyester | Tg =51 °C, OHV 220-240 mg KOH/g, viscosity 15-45 Pa.s at 160 °C |
| Polyester 4 | Saturated hydroxylated polyester | Tg =54 °C, OHV 28-32 mg KOH/g, viscosity 15-45 Pa.s at 160 °C, AV $\leq$ 1.0 mg KOH/g |
| Polyester 5 | Saturated hydroxylated polyester | Tg =56 °C, OHV 25-35 mg KOH/g, AV $\leq$ 6 mg KOH/g, viscosity 15-30 Pa.s at 160 °C |
| HAA | β-hydroxy alkyl amide curing agent | N,N,N',N'-tetrakis(2-hydroxyethyladipamide tetrakis(2-hydroxyethyl). Crosslinker for carboxylated polyester. OHV 680 mg KOH/g. Melting |

(continued)

| Name | Purpose of ingredient in composition | Properties |
|---|---|---|
| | | range 120-140 °C. |
| Blocked NCO 1 | NCO curing agent | Blocked cycloaliphatic polyisocyanate. NCO content 12.7 %. Tg 48-58 °C |
| Blocked NCO 2 | NCO curing agent | Blocked polyisocyanate adduct. NCO content 14.8-15.7 %. Tg 41-53 °C |
| Internally blocked NCO | NCO curing agent | Internally blocked polyisocyanate. NCO content 14-15.5 %. Tg 65-82 °C |
| GMA curing agent | Glycidyl-functional acrylic curing agent | Tg = 78-82 °C. Theoretical epoxy equivalent weight = 700-750 |
| Levelling agent 1 | Levelling agent and flow control agent for general purpose | Polyacrylic resin adsorbed on silica |
| Levelling agent 2 | Levelling agent/surface additive | Polyester modified, hydroxyl functional polysiloxane, adsorbed on silicon dioxide |
| Levelling agent 3 | Levelling agent/surface additive | Macromer-modified acrylates |
| Levelling agent 4 | Levelling and anti-cratering additive | Compound of polymeric surface active substances |
| Levelling agent 5 | Leveling and anti-cratering additive | Modified polyacrylates, absorbed on silicon dioxide |
| Benzoin | Degassing agent | 2-Hydroxy-1,2-diphenyl ethanone. Melting point 134-138 °C. Purity min 99.5% |
| Accelerator | Catalyst | Tin-free metal complex, Melting point > 135 °C |
| UV Stabilizer 1 | UV absorber | Benzotriazole type UV absorber |
| UV Stabilizer 2 | Hindered amine light stabilizer | Oligomeric hindered amine light stabilizer |
| UV Stabilizer 3 | Thermal Stabilizer System (Antioxidant) | A blend of hindered phenolic and phosphite antioxidant |
| UV Stabilizer 4 | UV absorber | Triazine-based UV absorber |
| UV Stabilizer 5 | Hindered amine light stabilizer | Oligomeric hindered amine light stabilizer |
| Wetting agent | Wetting agent additive | High molecular-weight copolymer with pigment-affinic groups, adsorbed on silicon dioxide |
| Pigment 1 | White pigment | Rutile type $TiO_2$ pigment surface-treated with silica, zirconia, alumina and an organic compound. |
| Pigment 2 | Yellow pigment | Iron yellow 42 |
| Pigment 3 | Black pigment | Carbon black, Pigment black 7 |
| Pigment 4 | Red pigment | Iron oxide Pigment red 101 |
| Filler 1 | Filler | Barium sulphate. Average particle size 1 $\mu$m, density 4.4 g/cm$^3$, specific surface area 2.5 m$^2$/g, oil absorption 14 g/100g |
| Filler 2 | Filler | Alumina (Al(OH)$_3$), Particle size D50 10 $\mu$m, density 2.4 g/cm$^3$, specific surface area 3 m$^2$/g, oil absorption 24 g/100g |

**Preparation of Powder coating compositions**

Powder coating components were separately prepared using the following procedure:

(1) The raw materials were placed into a mixing tank, according to the corresponding weight percentage for pre-mixing, as shown in the Tables below, wherein the amounts of the ingredients are specified in wt% unless otherwise specified. Blending was carried out in the mixing tank in one stage, mixing at 500 rpm for 90 seconds.

(2) A twin-screw extruder was used to melt, mix, disperse and extrude the premixed raw materials uniformly. The temperatures of the extruder zones were 50-100 °C, and the screw speed was controlled at 600 rpm. Either a medium, also referred to as normal, screw configuration or a hard screw configuration of the screws was used. The extruded mixture was then cooled, tableted and broken.

(3) The crushed materials were graded and crushed further by an ICM mill. The intake airflow was set to 2.5 m$^3$/min, the speed dosing airlock was set to 3.5 rpm, and the velocity of the grinding disk was set to 80 m/s. The velocity of the mill classifier was controlled at 10-15 m/s to obtain a powder coating with a particle size $D_{50}$ of 30-50 microns. A free flow additive (0.06 wt%) was added in this step.

Two component powder coating compositions were then prepared in a final step:

(4) For a two-component system, the first and the second components were prepared separately according to steps (1) - (3) above. For a powder blend, the two separate powders were then dry blended together in the ratios shown in the Tables below. For a dry-on-dry (DoD) system, the first component and the second component were applied separately to a substrate.

**Preparation of samples for testing**

The powder coating composition was applied onto pre-treated aluminium panels using a Corona electrostatic spray gun. The panels used were AQT panels from Q-lab of 0.8 mm thickness and dimensions of 4x12 inches or 3x6 inches, and chrome-free Nabutan 310 panels from NABU with panel thickness of 1 mm and dimensions 7x14 cm. Unless otherwise specified, the coated panels were cured at 200-210°C for 10-30 minutes (object temperature). The dry film thickness, measured according to BS EN ISO 2178, of the coatings was 50-80 $\mu$m.

The powder coating composition was applied as a two-component dry-blend or dry-on-dry powder, as specified in the examples below. The dry blend powder was sprayed as a single powder while the dry-on-dry powders were sprayed separately; the first component first, then followed by the second component before curing.

**Test methods**

• Gloss: Measured in accordance with ISO 2813 at 60° angle. The assessment criteria applied were as follows:

Glossy: > 60 GU
Semi-glossy: 30-60 GU
Matt:<30 GU

• PCI flow: Determined by visual comparison to standard samples supplied by the Powder Coating Institute (PCI). The flow is rated on a scale from 1-10, where 10 is a smooth mirror-like surface and 1 is semi-texture. The assessment criteria applied were as follows:

Smooth: > 5
Semi-textured: 5-2
Textured: <2

• Dry adhesion: The procedure is based on ISO 2409:2013

This method describes the resistance of paint coatings to separate from substrates when a right-angle lattice pattern is cut into the coating, penetrating through to the substrate. A tape with specified adhesion is put over the lattice pattern and peeled off.
The assessment criteria applied were as follows:

0: no detachment
1: < 5 % detachment
2: 5-15 % detachment
3: 16-35 % detachment
4: 36-65 % detachment
5: >65 % detachment

• Hybrid Exposure of Xenon Arc and Peroxide (HE-XAP)

Generally, an accelerated weathering test can be used to give an indication of a coatings performance when exposed to natural weathering, based on ISO 16474-2:2013 method A, wherein the specimens are exposed to xenon-arc light in the presence of moisture to reproduce the weathering effects that occur when materials are exposed in end-use environments. In the testing carried out herein, the xenon arc exposure is made more intense, with higher irradiance in addition to 1 % peroxide feeding (as summarised in Table 2 below). The 1 % peroxide feeding makes the coating more sensitive to photodegradation, particularly in the presense of TiOz pigment in the formulation.

The assessment is based on gloss retention (GR %) expressed as a percentage of the measured gloss, over the initial gloss before exposure

$$(GR \ (\%) = \frac{gloss}{initial \ gloss} * 100)$$

where gloss is measured in accordance with ISO 2813 at 60° angle.

The assessment criteria applied for the GR % were as follows: > 50 % pass, < 50 % fail relative to the duration of exposure time.

Table 2:HE-XAP chamber condition used, compared with standard Xenon arc test according to ISO 16474

|  | ISO 16474-2:2013 method A | HE-XAP utilised |
|---|---|---|
| Light source | Xenon arc | Xenon arc |
| Irradiance (W/m²) | 60 | **80** |
| Blank standard temperature (°C) | 65 | 65 |
| Relative humidity (%) | 50 | 50 |
| Chamber air temperature (°C) | 38 | **45** |
| Water cycle | Once in 2 hr (18 min) | **Once in 6 hr (30 min)** |
| Peroxide cycle | No peroxide | **6x in 1 hr (1 min)** |

• Natural accelerated weathering -(Equatorial Mount with Mirrors for Acceleration with Water- EMMAQUA): The test method describes outdoor exposure of coated panels to approximately eight times suns intensity and water sprays cycle in accordance to ASTM G90 standards. The technique tracks and concentrates the natural sunlight via ten highly reflective specially coated mirrors onto coated panels target area to provide excellent spectral match to the sunlight and correlates well to subtropical conditions such as Southern Florida, as well as arid desert environment such as Arizona. The outdoor exposure equivalent according to Qualicoat class 3 or AAMA 2605 for 10 years is 2900 MJ/m2 for EMMAQUA (290 MJ/m2 per year).

The assessment criteria applied for the GR % were as follows: > 50 % pass, < 50 % fail relative to the duration of exposure time.

• Wet adhesion: The procedure is based on Qualicoat Specifications 2024 2.4.2 wet adhesion test procedure.

This method describes the resistance of paint coatings to separate from substrate after boiling in demineralised water (maximum 10 μS/cm at 25 °C) for 2 hr, allowed to cool and then a crosscut is performed on it. A tape with specified adhesion is put over the lattice pattern and peeled off.

The assessment criteria applied were as follows:

0: no detachment
1: < 5 % detachment
2: 5-15 % detachment
3: 16-35 % detachment
4: 36-65 % detachment
5: >65 % detachment

• Water spot effect: This test describes the resistance of coatings to spotting by water. The test panel is immersed in water 60 °C for 24 hrs without the panel touching or in contact with the bottom of the beaker. At the end of the test, the panel is cooled down in demineralised water at a temperature of ≤ 5°C, dried and colour change is determined. ΔE and ΔL (CIELAB formula) according to ISO 11664-4 is measured including specular reflection. ΔL (CIELAB) less than 4 is acceptable.

• Impact resistance: 2.5 Nm indentation was applied to the reverse side of the coated panel according to ASTM D 2794, followed by an adhesion test using a tape with adhesive strength between 6 N and 10 N per 25 mm width according to Qualicoat Specifications 2023 2.8 Impact test. 0 denotes no loss of adhesion between the coating and the substrate. The assessment criteria applied were as follows:

    No detachment = Pass
    Detachment = Fail

• Cupping: 5 mm indentation was applied to the reverse side of the coated panel according to ISO 1520, followed by an adhesion test using a tape with adhesive strength between 6 N and 10 N per 25 mm width according to Qualicoat Specifications 2023 2.6 Cupping test. 0 denotes no loss of adhesion between the coating and the substrate. The assessment criteria applied were as follows:

    No detachment = Pass
    Detachment = Fail

• Bend test cylindrical: 5 mm indentation was applied to the reverse side of the coated panel according to ISO 1519, followed by an adhesion test using a tape with adhesive strength between 6 N and 10 N per 25 mm width according to Qualicoat Specifications 2023 2.7 Bend test. 0 denotes no loss of adhesion between the coating and the substrate. The assessment criteria applied were as follows:

    No detachment = Pass
    Detachment = Fail

• Acetic acid salt spray: The test is a standardized method based on ISO 9227, to test corrosion resistance of the coating on a substrate. A 10 cm length of X-shape scribe mark of 1 mm width is cut on the coatings down to the metal substrate, and tested in an acetic acid salt spray chamber for 1000 to 2000 hrs. The evaluation of blistering is compared to reference according to ISO 4628-2, where the assessment criteria applied was as follows

    No blistering = 0
    Sparsely blistering density = 1-2
    Medium blistering density = 3-4
    Medium to high blistering density = 4
    Highly blistering density = 5

• Constant climate condensation water: the test describes a process of determining resistance to humidity in a constant climate condensation chamber according to ISO 6270-2. A 10 cm length of X-shape scribe mark of 1 mm width is cut on the coatings down to the metal substrate, and tested in a constant climate chamber for 1000 to 2000 hrs. The evaluation of blistering is compared to reference according to ISO 4628-2, where the assessment criteria applied was as follows:

    No blistering = 0
    Sparsely blistering density = 1-2
    Medium blistering density = 3-4
    Medium to high blistering density = 4
    Highly blistering density = 5
    Colour change before and after the exposure in the chamber is also reported.

• Abrasion resistance: The test describes mar and scratch resistance of coatings, where a panel which surface is cleaned is set on a Martindale tester, then given 16 Lissajous movement according ISO 2813 at 60° angle incidence, performed at 23 ± 2°C and 50 ± 5% RH room conditions. Assessment is based on gloss retention where gloss retention must not be less than 30 %.

Examples, comparative examples and reference examples are shown in the Tables below.

**Reference examples:**

The compositions set out in Table 3 below were prepared as reference examples.

Table 3

| Reference examples (wt %) | CE-1 | CE-2 |
|---|---|---|
| Fluoro-polymer | 25.6 | 25.3 |
| Polyester 4 | 25.6 | 25.3 |
| Blocked NCO 1 | 14.4 | 14.2 |
| Levelling agent 1 | 0.7 | 0.6 |
| Benzoin | 0.3 | 0.3 |
| UV stabilizer 1 | | 0.6 |
| UV stabilizer 2 | | 0.3 |
| UV stabilizer 3 | | 0.3 |
| Wetting agent | 0.5 | 0.5 |
| Pigment 1 | 32.8 | 32.4 |
| Total | 100.0 | 100.0 |
| Sum Binder system (wt%) | 65.7 | 64.8 |
| Fluoro: PE weight ratio | 50:50 | 50:50 |
| Fluoro + PE wt% | 51.3 | 50.6 |
| Fluoro wt% of binder system | 39.0 | 39.0 |
| PE + curing agent wt% of binder system | 61.0 | 61.0 |
| **Results** | | |
| Gloss at angle 60 ° (GU) | 11.0 | 12.0 |
| Flow (PCI) (0 worst, 10 best) | 1.0 | 1.0 |
| Dry adhesion (0 best, 5 worst) | 0.0 | 0.0 |
| **Hybrid Exposure System (HE-XAP)** | | |
| Gloss Retention % (0 hr) | 100.0 | 100.0 |
| Gloss Retention % (100 hr) | 94.0 | 102.0 |
| Gloss Retention % (200 hr) | 56.0 | 88.0 |
| Gloss Retention % (250 hr) | 48.0 | 74.0 |
| Gloss Retention % (300 hr) | | 67.0 |
| Gloss Retention % (400 hr) | | 54.0 |
| Gloss Retention % (500 hr) | | 46.0 |

Reference examples CE-1 and CE-2 comprising a typical fluoropolymer-based resin as part of the binder system serve as reference for comparison.

The formulations are hybrids consisting of a fluoropolymer and a hydroxy-functionalized super durable polyester in a 50:50 weight ratio. The cured film had a matt finish, (gloss < 20 GU), textured appearance and a very good dry adhesion. Aside from the general properties of the cured film, the main property that indicates their weather durability is their UV (ultraviolet) resistance, tested with harsh hybrid exposure of xenon arc and peroxide in the Hybrid Exposure System (HE-XAP).

In comparative example CE-1, which contains no UV stabilizers, the coating retained gloss above 50 % until 200 hr before it failed (i.e. < 50 % gloss retention) at 250 hr of exposure. The fluoropolymer-polyester hybrid binder system (without UV stabilizers), clearly shows a superior durability (resistance to UV + peroxide exposure) and can be used to benchmark the examples that follows to retain gloss above of 50 % at 200 hr.

Furthermore, the fluoropolymer-polyester hybrid with UV stabilizers illustrated in example CE-2 retained gloss at 88 % at 200 hr and lasted until 400 hr before it failed at 500 hr of exposure. Therefore, examples retaining a gloss retention above 50 % within 200 and 400 hr of the HE-XAP exposure fall within superior durability comparable to the fluoropolymer-polyester hybrids in the examples above.

**Example 1: Preparation of one component powder coating compositions for comparisons**

The one component compositions set out in Table 4 below were prepared.

Table 4 *** 30-50 wt% silicone, the remaining is polyester. Ratio could be as low as 30:70.

| Comparative examples (wt %) | CE-3 | CE-4 | CE-5 | CE-6 | CE-7 | CE-8 | CE-9 |
|---|---|---|---|---|---|---|---|
| Silicone 2 | | | 11.5 | 50.9 | 26.1 | 36.4 | 43.4 |
| Silicone 4 | 53.0 | | | | | | |
| Polyester 3 | | | | 8.5 | | | 11.3 |
| Polyester 4 | | | | | | 30.8 | |
| Polyester 1 | | 63.5 | 55.8 | | 38.0 | | |
| Blocked NCO 1 | 13.0 | | 0.1 | 13.3 | | 5.6 | 17.7 |
| Blocked NCO 2 | | | | | 0.5 | | |
| HAA | | 2.0 | 1.7 | | 1.2 | | |
| Levelling agent 1 | 0.6 | | 0.9 | 0.2 | 1.6 | 0.4 | 0.3 |
| Levelling agent 2 | | | | 0.8 | | 0.6 | 0.7 |
| Levelling agent 3 | | 1.0 | | | | | |
| Benzoin | 0.4 | 0.3 | 0.3 | 1.2 | 1.1 | 1.2 | 1.2 |
| Accelerator | | | | | 0.1 | | 0.5 |
| UV stabilizer 1 | | | | 0.7 | | 0.7 | 0.7 |
| UV stabilizer 2 | | | | 0.4 | | 0.4 | 0.4 |
| UV stabilizer 3 | | | | 0.4 | | 0.4 | 0.4 |
| Wetting agent | | 0.5 | 0.9 | 1.2 | | 1.1 | 1.1 |
| Pigment 1 | 33.0 | 32.7 | 28.8 | 22.5 | 27.4 | 22.5 | 22.3 |
| Filler 1 | | | | | 3.9 | | |
| Total | 100.0 | 100.0 | 100.0 | 99.9 | 99.9 | 99.9 | 99.9 |
| Sum Binder system (wt%) | 66.0 | 65.5 | 69.1 | 72.7 | 65.8 | 72.8 | 72.4 |
| Silicone: Polyester weight ratio | 50:50** * | 0:100 | 17:83 | 86:14 | 41:59 | 54:46 | 79:21 |
| Si + PE wt% | 53.0 | 63.5 | 67.3 | 59.4 | 64.1 | 67.2 | 54.7 |
| Si wt% of binder system | 0.0 | 0.0 | 16.6 | 70.0 | 39.7 | 50.0 | 59.9 |
| PE + curing agent wt% of binder system | 59.8 | 100.0 | 83.4 | 30.0 | 60.3 | 50.0 | 40.1 |

**Example 2a: Preparation of the first component of two-component powder coating compositions**

Various first components were prepared as shown in Table 5a below. The amount of each ingredient is given as weight percentage (wt%) of the first component.

Table 5a

| First Component (wt %) | A-1 | A-2 | A-3 | A-4 | A-5 | A-6 | A-7 | A-8 | A-9 | A-10 |
|---|---|---|---|---|---|---|---|---|---|---|
| Silicone 1 | | | | | | | | | | 8.17 |
| Silicone 2 | | 11.5 | | | | | | 7.7 | 3.1 | |
| Polyester 4 | | | | | | 55.5 | | | | |

(continued)

| First Component (wt %) | A-1 | A-2 | A-3 | A-4 | A-5 | A-6 | A-7 | A-8 | A-9 | A-10 |
|---|---|---|---|---|---|---|---|---|---|---|
| Polyester 1 | 63.2 | 55.8 | 63.8 | 63.5 | 83.0 | | | 74.4 | 60.3 | 79.2 |
| Polyester 2 | | | | | | | 61.1 | | | |
| Blocked NCO 1 | | 0.1 | | | | 10.2 | | | | |
| HAA | 2.0 | 1.7 | 2.0 | 2.0 | 2.6 | | 3.9 | 2.3 | 1.9 | 2.5 |
| Levelling agent 1 | | 0.9 | | | 0.7 | 0.7 | 0.7 | 0.8 | 1.0 | |
| Levelling agent 3 | 1.0 | | 1.0 | 1.0 | 0.7 | | 1.0 | 0.8 | | |
| Levelling agent 5 | | | | | | | | | | 1.4 |
| Benzoin | 0.3 | 0.3 | 0.3 | 0.3 | 0.7 | 0.3 | 0.3 | 0.8 | 0.5 | 0.9 |
| UV stabilizer 4 | | | | | 1.3 | | | | | 1.3 |
| UV stabilizer 5 | | | | | 0.9 | | | | | 0.9 |
| Wetting agent | 1.0 | 0.9 | | 0.5 | 1.3 | 0.5 | 0.5 | 1.3 | 0.5 | 0.7 |
| Pigment 1 | 32.5 | 28.8 | 32.9 | 32.7 | 0.8 | 32.8 | 32.5 | 2.3 | 32.7 | 0.8 |
| Pigment 2 | | | | | 1.2 | | | 1.3 | | 1.2 |
| Pigment 3 | | | | | 0.3 | | | 1.0 | | 0.3 |
| Pigment 4 | | | | | 2.5 | | | 7.3 | | 2.6 |
| Filler 1 | | | | | 4.3 | | | | | |
| Σ Binder system 1st component (wt%) | 65.2 | 69.1 | 65.8 | 65.5 | 85.6 | 65.7 | 65.0 | 84.4 | 65.3 | 89.8 |
| Si : PE weight ratio 1st component | 0:100 | 17:83 | 0:100 | 0:100 | 0:100 | 0:100 | 0:100 | 9:91 | 5:95 | 9:91 |
| Si + PE wt% 1st component | 63.2 | 67.3 | 63.8 | 63.5 | 83.0 | 55.5 | 61.1 | 82.1 | 63.4 | 87.4 |
| Si wt% of binder system | 0.0 | 16.6 | 0.0 | 0.0 | 0.0 | 0.0 | 0.0 | 9.1 | 4.7 | 9.1 |
| PE + curing agents wt% of binder system | 100.0 | 83.4 | 100.0 | 100.0 | 100.0 | 100.0 | 100.0 | 90.9 | 95.3 | 90.9 |

**Example 2b: Preparation of the second component of two-component powder coating compositions**

Various second components were prepared as shown in Table 5b below. The amount of each ingredient is given as weight percentage (wt%) of the second component.

Table 5b

| Second Component (wt %) | B-8 | B-9 | B-10 | B-11 | B-12 | B-13 | B-14 | B-15 | B-16 | B-17 | B-18 | B-19 |
|---|---|---|---|---|---|---|---|---|---|---|---|---|
| Silicone 1 | | | | 75.1 | | | 95.9 | | | | | 66.0 |
| Silicone 2 | 50.6 | 53.4 | 64.7 | | 71.6 | 95.9 | | 68.8 | 68.5 | 70 | 60.7 | |
| Polyester 3 | 8.5 | 8.2 | 4.1 | 4.7 | 2.8 | | | | 2.7 | | | 4.0 |
| Polyester 4 | | 1.6 | 0.8 | 1.0 | 0.7 | | | | 0.5 | 17.5 | | |
| Polyester 5 | | | | | | | | 6.5 | | | | |
| Polyester 1 | | | | | | | | | | | 15.2 | |

(continued)

| Second Component (wt %) | B-8 | B-9 | B-10 | B-11 | B-12 | B-13 | B-14 | B-15 | B-16 | B-17 | B-18 | B-19 |
|---|---|---|---|---|---|---|---|---|---|---|---|---|
| Polyester 2 | | | | | | | | | | | | 0.4 |
| Blocked NCO 1 | 13.3 | 13.1 | 6.6 | 7.6 | 4.5 | | | 1.2 | 4.4 | 3.2 | | 7.6 |
| HAA | | | | | | | | | | | 1.0 | 0.03 |
| Levelling agent 1 | 0.2 | 0.2 | 0.1 | 0.2 | 0.1 | | | 0.1 | 0.1 | 1.4 | 1.2 | 0.1 |
| Levelling agent 2 | 0.8 | 0.8 | 1.0 | 1.1 | 1.1 | 1.4 | 1.4 | 1.0 | 1.0 | | | 1.0 |
| Levelling agent 4 | | | | | | 0.7 | 0.7 | 0.8 | | | | |
| Benzoin | 1.2 | 1.2 | 1.2 | 0.7 | 1.3 | | | | 1.2 | 0.6 | 0.5 | 0.8 |
| Accelerator | 0.5 | 0.6 | 0.6 | 0.8 | 0.4 | | | 0.7 | 0.7 | | | 0.3 |
| Mix UV stabilizer 1:2:3 in weight ratio 2:1:1 | 1.4 | 1.5 | 1.5 | | | 2.0 | 2.0 | 1.5 | 1.5 | | | |
| UV stabilizer 4 | | | | 1.3 | | | | | | 1.4 | 1.1 | 1.2 |
| UV stabilizer 5 | | | | 0.9 | | | | | | 0.9 | 0.8 | 0.8 |
| Wetting agent | 1.1 | 0.3 | 0.3 | 1.3 | 1.1 | | | 0.3 | 0.3 | | | 0.6 |
| Pigment 1 | 22.3 | 19.1 | 19.0 | 0.2 | 16.4 | | | 19.1 | 19.0 | 0.8 | 19.5 | 0.1 |
| Pigment 2 | | | | 0.3 | | | | | | 1.3 | | 0.2 |
| Pigment 3 | | | | 0.1 | | | | | | 0.4 | | 0.1 |
| Pigment 4 | | | | 0.5 | | | | | | 2.6 | | 0.5 |
| Filler 2 | | | | 4.4 | | | | | | | | 16.4 |
| Total second component | 100.0 | 100.0 | 100.0 | 100.0 | 100.0 | 100.1 | 100.0 | 100.0 | 99.9 | 100.0 | 100.0 | 100.0 |
| Σ Binder system 2nd componeny (wt%) | 72.4 | 76.3 | 76.2 | 88.3 | 79.6 | 95.9 | 95.9 | 76.5 | 76.2 | 90.7 | 76.9 | 78.0 |
| Si : PE weight ratio 2nd component | 86:14 | 84:16 | 93:7 | 93:7 | 95:5 | 100:0 | 100:0 | 91:9 | 96:4 | 80:20 | 80:20 | 94:6 |
| Si + PE wt% 2nd component | 59.1 | 63.2 | 69.6 | 80.8 | 75.1 | 95.9 | 95.9 | 75.3 | 71.8 | 87.5 | 75.9 | 70.4 |
| Si wt% of binder system | 69.9 | 70.0 | 84.9 | 85.0 | 89.9 | 100.0 | 100.0 | 90.0 | 90.0 | 77.2 | 80.0 | 84.6 |

(continued)

| Second Component (wt %) | B-8 | B-9 | B-10 | B-11 | B-12 | B-13 | B-14 | B-15 | B-16 | B-17 | B-18 | B-19 |
|---|---|---|---|---|---|---|---|---|---|---|---|---|
| PE + curing agent wt% of binder system | 30.1 | 30.0 | 15.1 | 15.0 | 10.1 | 0.0 | 0.0 | 10.0 | 10.0 | 22.8 | 20.0 | 15.4 |

## Example 3: Preparation of the second component for comparative examples

Various second components were prepared as shown in Table 6 below. The amount of each ingredient is given as weight percentage (wt%) of the second component.

Table 6

| Second Component (wt %) | B-1 | B-2 | B-3 | B-4 | B-5 | B-6 | B-7 |
|---|---|---|---|---|---|---|---|
| Silicone 1 | | | | 28.5 | 38.1 | | |
| Silicone 2 | 33.9 | 38.6 | 68.8 | | | 50.6 | |
| Silicone 3 | | | | | | | 58.8 |
| Polyester 3 | 13.2 | 11.2 | 3.0 | | | | |
| Polyester 4 | | 24.2 | 0.6 | | | 33.8 | 14.7 |
| Polyester 5 | | | | | 38.1 | | |
| Polyester 1 | | | | 30.5 | | | |
| GMA curing agent | | | | 10.2 | | | |
| Blocked NCO 1 | 20.7 | 21.9 | | 0.1 | 0.2 | 6.2 | 3.3 |
| Internally blocked NCO | | | 4.1 | | | | |
| HAA | | | | 4.9 | | | |
| Levelling agent 1 | 0.3 | | 0.1 | 0.5 | 1.5 | 1.4 | 1.2 |
| Levelling agent 2 | 0.5 | 1.4 | 1.0 | | | | |
| Levelling agent 4 | | 0.7 | 0.8 | | | | |
| Benzoin | 1.1 | | | 0.5 | 0.8 | 0.6 | 0.5 |
| Accelerator | 0.1 | | 0.7 | | 0.2 | | |
| UV stabilizer 1 | 0.7 | 1.0 | 0.8 | | 0.8 | | |
| UV stabilizer 2 | 0.3 | 0.5 | 0.4 | | 0.4 | | |
| UV stabilizer 3 | 0.3 | 0.5 | 0.4 | | 0.4 | | |
| UV stabilizer 4 | | | | | | 1.4 | 1.2 |
| UV stabilizer 5 | | | | | | 0.9 | 0.8 |
| Wetting agent | 1.1 | | 0.3 | | | | |
| Pigment 1 | 27.9 | | 19.1 | 24.8 | 0.7 | 0.8 | 19.5 |
| Pigment 2 | | | | | 1.1 | 1.3 | |
| Pigment 3 | | | | | 0.3 | 0.4 | |
| Pigment 4 | | | | | 2.2 | 2.6 | |
| Filler 1 | | | | | 15.2 | | |
| Total second component | 100.0 | 100.0 | 100.0 | 100.0 | 100.0 | 100.0 | 100.0 |

(continued)

| Second Component (wt %) | B-1 | B-2 | B-3 | B-4 | B-5 | B-6 | B-7 |
|---|---|---|---|---|---|---|---|
| Σ Binder system 2nd component (wt%) | 67.7 | 95.9 | 76.5 | 74.2 | 76.4 | 90.6 | 76.8 |
| Si : PE weight ratio 2nd component | 72:28 | 52:48 | 95:5 | 48:52 | 50:50 | 60:40 | 80:20 |
| Si + PE wt% 2nd component | 47.07 | 74.00 | 72.38 | 59.00 | 76.20 | 84.40 | 73.50 |
| Si wt% of binder system | 50.0 | 40.3 | 90.0 | 41.1 | 49.9 | 55.8 | 76.6 |
| PE + curing agent wt% of binder system | 50.0 | 59.7 | 10.0 | 58.9 | 50.1 | 44.2 | 23.4 |

When preparing two component powder coating compositions in the following examples 4-10, the first component and the second component of the compositions were dry blended (physical mixed after extrusion/milling) The mixing ratio of the first component to the second component was 1:1 by weight.

**Example 4: Effect of second component in a two-component power coating composition**

Table 7

| Examples of 2K coating compositions | E-1 | E-2 | | CE-10 |
|---|---|---|---|---|
| **First Component** | A-2 | A-2 | CE-5 | A-2 |
| **Second Component** | B-8 | B-12 | - | B-1 |
| Σ Binder system (wt%) | 70.8 | 74.4 | 69.10 | 68.4 |
| Si : PE weight ratio | 49:51 | 58:42 | 17:83 | 40:60 |
| Si + PE wt% | 63.2 | 71.2 | 67.3 | 57.2 |
| Si wt% of binder system | 43.9 | 55.9 | 16.6 | 33.2 |
| PE + curing agents wt% of binder system | 56.1 | 44.1 | 83.4 | 66.8 |
| Si wt% of total formulation | 31.1 | 41.6 | 11.5 | 22.7 |
| **Results** | | | | |
| Gloss at angle 60 ° (GU) (ISO 2813) | 17.8 | 24.7 | 84.4 | 19.2 |
| Flow (PCI) | 2 | 2 | 2 | 1 |
| Dry adhesion (ISO 2409) | 0 | 0 | 0 | 0 |
| Hybrid Exposure System (HE-XAP System) | | | | |
| Gloss Retention % (0 hr) | 100 | 100 | 100 | 100 |
| Gloss Retention % (100 hr) | 94 | 95 | 43.0 | 89 |
| Gloss Retention % (200 hr) | 78 | 84 | 5.0 | 53 |
| Gloss Retention % (250 hr) | 72 | 74 | | 47 |
| Gloss Retention % (300 hr) | 64 | 68 | | |
| Gloss Retention % (400 hr) | 59 | 57 | | |
| Gross Retention % (500 hr) | 55 | | | |
| Gross Retention % (600 hr) | 52 | | | |
| Gross Retention % (700 hr) | 48 | | | |

The first component A-2 of E-1 is similar to CE-5, a 1K composition, which failed in UV resistance in less than 100 hours. However, when the first component A-2 is combined with two different second components, B-8 and B-12, in two-component compositions E-1 and E-2, respectively, the resulting two-component compositions showed very good weatherability performance. Example E-1 had a UV resistance of more than 50 % after 600 hours, while example E-2 had a UV resistance of more than 50 % after 400 hours despite the absence of UV stabilizers in this two-component composition.

Both B-8 and B-12 include more than 50 wt% hydroxy functionalised silicone with phenyl, or phenyl and methyl, substituents. The Si:PE weight ratio of example E-1 is 49:51 while the Si:PE weight ratio of example E-2 is 58:42. On the other hand, when the first component A-2 was combined with the second component B-1, which has a Si:PE weight ratio of 72:28, thereby giving an overall Si:PE weight ratio for CE-10 of 40:60 a UV resistance of more than 50 % was only obtained for 200 hours.

This shows that the weight ratio of silicone to polyester should be above 40:60 in order to achieve a desirably high level of UV resistance, and weatherability.

**Example 5: Effect of hydroxy functionalized polysiloxane**

Table 8

| Examples of 2K coating compositions | E-3 | E-4 | E-5 | CE-11 | | | | | |
|---|---|---|---|---|---|---|---|---|---|
| **First Component** | A-3 | A-3 | A-3 | A-9 | CE-1 | CE_2 | CE-7 | CE-8 | CE-9 |
| **Second Component** | B-13 | B-14 | B-8 | B-7 | - | - | - | - | - |
| Σ Binder system (wt%) | 80.9 | 80.9 | 69.1 | 71.1 | 65.68 | 64.82 | 65.80 | 72.80 | 72.40 |
| Si/Fluoro: PE weight ratio | 60:40 | 60:40 | 41:59 | 45:55 | 50:50 | 50:50 | 41.59 | 54:46 | 79:21 |
| Si/Fluoro + PE wt% | 79.9 | 79.9 | 61.4 | 68.5 | 51.25 | 50.58 | 64.10 | 67.20 | 54.70 |
| Si/Fluoro wt% of binder system | 59.3 | 59.3 | 36.6 | 43.6 | 39.0 | 39.0 | 39.7 | 50.0 | 59.9 |
| PE + curing agents wt% of binder system | 40.7 | 40.7 | 63.4 | 56.4 | 61.0 | 61.0 | 60.3 | 50.0 | 40.1 |
| Si wt% of total formulation | 48.0 | 48.0 | 25.3 | 31.0 | 0 | 0 | 26.1 | 36.4 | 43.4 |
| **Results** | | | | | | | | | |
| Gloss at angle 60 ° (GU) (ISO 2813) | 66.1 | 49.8 | 21.5 | 42.4 | 11.0 | 12.0 | 11.0 | 7.8 | 16.4 |
| Flow (PCI) | 3 | 2 | 2 | 2 | 1.0 | 1.0 | 1.0 | 2.0 | 2.0 |
| Dry adhesion (ISO 2409) | 0 | 0 | 0 | 5 | 0.0 | 0.0 | 0.0 | 3.0 | 3.0 |
| Hybrid Exposure System (HE-XAP System) | | | | | | | | | |
| Gloss Retention % (0 hr) | 100 | 100 | 100 | 100 | 100.0 | 100.0 | 100.0 | 100.0 | 100.0 |
| Gloss Retention % (100 hr) | | | 94 | 97 | 94.0 | 102.0 | 94.0 | 84.6 | 64.0 |
| Gloss Retention % (200 hr) | 88.8 | 83.5 | 80 | 74 | 56.0 | 88.0 | 56.0 | 65.4 | 62.2 |
| Gloss Retention % (250 hr) | | | 71 | 46 | 48.0 | 74.0 | 48.0 | 57.7 | 57.7 |
| Gloss Retention % (300 hr) | | | 67 | | | 67.0 | | | |
| Gloss Retention % (400 hr) | | | 58 | | | 54.0 | | | |
| Gross Retention % (500 hr) | | | 53 | | | 46 | | | |

The presence of hydroxy functionalized polysiloxane with either 1:1 phenyl/methyl substitution or phenyl substitution contributes to coatings with good general properties, including very good adhesion and high UV resistance. A hydroxy functionalized polysiloxane with 2.7:1 phenyl/propyl substitution used in comparative example CE-11 showed very poor adhesion, which may also have contributed to the lower UV resistance.

The use of a two-component coating composition allows for varying the amount of hydroxy functionalised silicone with phenyl, or phenyl and methyl, substituents in the second component up to a loading of 96 wt% as shown in E-3 and E-4. These have second components B-13 and B-14 respectively, yet maintain very good adhesion. They are combined with a first component, which mainly comprises polyesters as the binder system.

Similarly, in a two-component coating composition, as little as 25 wt% hydroxy functionalized polysiloxane (silicone 2) of the total formulation may be present as shown by example E-5, which shows a UV-resistance performance comparable to, or even better relative to the reference examples CE-1 and CE-2. However, when a similar amount of hydroxy functionalised silicone with phenyl, or phenyl and methyl, substituents (silicone 2, 26 wt%) was used in a one-component coating composition in comparative example CE-7 the performance was clearly poorer.

Furthermore, the overall loading in a two-component coating composition of the present invention allows up to 48 wt% hydroxy functionalised silicones with phenyl, or phenyl and methyl, substituents of the total formulation as illustrated in examples E-3 and E-4. In contrast, in single component compositions (CE-8 and CE-9) 36 and 43 wt% silicone resulted in a poorer adhesion and UV resistance.

Advantageously, the two component system of the present invention enables both UV resistance and adhesion to be optimised simultaneously, and a highly desirable balance of properties achieved.

### Example 6: Effect of polyester

Table 9

| Examples of 2K coating compositions | E-6 | CE-12 | E-7 | E-1 | E-8 | E-9 | E-10 | E-11 |
|---|---|---|---|---|---|---|---|---|
| **First Component** | A-8 | A-8 | A-9 | A-2 | A-6 | A-7 | A-4 | A-4 |
| **Second Component** | B-17 | B-6 | B-18 | B-8 | B-16 | B-16 | B-9 | B-10 |
| Σ Binder system (wt%) | 87.5 | 87.5 | 71.1 | 70.8 | 70.9 | 70.6 | 70.9 | 70.8 |
| Si : PE weight ratio | 46:54 | 35:65 | 46:54 | 49:51 | 54:46 | 48:52 | 42:58 | 49:51 |
| Si + PE wt% | 84.8 | 83.2 | 69.7 | 63.2 | 63.6 | 66.5 | 63.4 | 66.5 |
| Si wt% of binder system | 44.4 | 33.3 | 45.2 | 43.9 | 48.3 | 48.5 | 37.7 | 45.7 |
| PE + curing agents wt% of binder system | 55.6 | 66.7 | 54.8 | 56.1 | 51.7 | 51.5 | 62.3 | 54.3 |
| Si wt% of total formulation | 38.8 | 29.1 | 31.9 | 31.1 | 34.3 | 34.3 | 26.7 | 32.4 |
| **Results** | | | | | | | | |
| Gloss at angle 60 ° (GU) (ISO 2813) | 32 | 37.8 | 62.1 | 17.8 | 5.2 | 32.3 | 20 | 24 |
| Flow (PCI) | 2 | 2 | 2 | 2 | 1 | 2 | 2 | 2 |
| Dry adhesion (ISO 2409) | 0 | 0 | 0 | 0 | 2 | 0 | 0 | 0 |
| Hybrid Exposure System (HE-XAP System) | | | | | | | | |
| Gloss Retention % (0 hr) | 100 | 100 | 100 | 100 | 100 | 100 | 100 | 100 |
| Gloss Retention % (100 hr) | 82 | 62 | 100 | 94 | 99 | 97 | 98 | 103 |
| Gloss Retention % (200 hr) | 83 | 51 | 99 | 78 | 90 | 84 | 85 | 95 |
| Gloss Retention % (250 hr) | 76 | 40 | 82 | 72 | 81 | 88 | 82 | 94 |
| Gloss Retention % (300 hr) | 72 | | 68 | 64 | 75 | 72 | 76 | 89 |
| Gloss Retention % (400 hr) | | | | 59 | 66 | 60 | 71 | 85 |
| Gross Retention % (500 hr) | | | | 55 | 60 | 53 | 65 | 82 |
| Gross Retention % (600 hr) | | | | 52 | 53 | 47 | 62 | 77 |
| Gross Retention % (700 hr) | | | | 48 | 49 | | 59 | 76 |
| Gross Retention % (800 hr) | | | | | | | 53 | |

The polyesters used in these examples were either carboxy or hydroxy functional polyesters. In some instances, a single or a combination of two polyesters having different functionalities are used in the two-component compositions. The polyester(s) constitute the main binder system in the first component and typically amount to about 50 to 83 wt%.

In the second component, the amount of polyester is limited to allow for a good UV resistance as the hydroxy functionalised silicones with phenyl, or phenyl and methyl, substituents content dominates. As illustrated in CE-12, higher polyester content in the second component, e.g. beyond 33 wt%, led to poorer UV-resistance compared to E-6 which had about 18 wt% polyester in the second component.

The presence of different combinations of polyesters having different functionality (i.e. carboxy functional and/or hydroxy functional polyesters) in the first and second component contributes to different levels of incompatibility between the two components, which impacts the gloss of the final two-component coating composition. E-7, wherein the same carboxy functional polyester was used in the two-components coating, has a glossy finish (62 GU) whereas E-1 comprising both a carboxy and a hydroxy functional polyester in the two components has a matt finish (18 GU).

Further examples of adjusting gloss via the polyester include E-8 and E-9, where both had the same second component (B-16) with two hydroxy functional polyesters, but where the first components had polyesters with different functionality, resulting in low gloss (5.2 GU) for E-8 having a hydroxy functional polyester and semi-gloss (32.3 GU) for E-9 having a carboxy functional polyester. It is important to note that the gloss adjustment/difference is not only due to the type of functionality but also the order of magnitude of the acid value and the hydroxy value.

Even further, within the second components, varying for example hydroxy value can also help to adjust the gloss as shown in E-10 having a matt finish of 20.0 GU and E-11 having a finish of 24 GU.

Therefore, the presence of polyester is not only critical for improving the adhesion of the coating composition on the substrate, but also can be used as a mechanism to regulate the gloss of the coating.

**Example 7: Effect of the weight ratio of hydroxy functionalized polysiloxane to polyester - Table 10**

| Examples of 2K coating compositions | E-5 | | | | | | CE-13 | CE-10 | CE-14 | CE-15 | |
|---|---|---|---|---|---|---|---|---|---|---|---|
| **First Component** | A-3 | CE-7 | CE-4 | CE-5 | CE-6 | CE-8 | A-1 | A-2 | A-3 | A-8 | CE_2 |
| **Second Component** | B-8 | - | - | - | - | - | B-1 | B-1 | B-2 | B-5 | - |
| Σ Binder system (wt%) | 69.1 | *65.80* | 65.46 | 69.10 | 72.70 | 72.80 | 66.5 | 68.4 | 80.9 | 80.4 | 64.82 |
| Si/Fluoro : PE weight ratio | 41:59 | *41:59* | 0:100 | 17:83 | 86:14 | 54:46 | 31:69 | 40:60 | 28:72 | 29:71 | 50:50 |
| Si/Fluoro + PE wt% | 61.4 | *64.10* | 63.50 | 67.3 | 59.40 | 67.20 | 55.1 | 57.2 | 68.9 | 79.1 | 50.58 |
| Si/Fluoro wt% of binder system | 36.6 | *39.7* | 0.0 | 16.6 | 70.0 | 50.0 | 25.5 | 33.2 | 23.9 | 28.5 | 39.0 |
| PE + curing agents wt% of binder system | 63.4 | *60.3* | 100.0 | 83.4 | 30.0 | 50.0 | 74.5 | 66.8 | 76.1 | 71.5 | 61.0 |
| Si wt% of total formulation | 25.3 | 26.1 | 0 | 11.5 | 50.9 | 36.4 | 16.9 | 22.7 | 19.3 | 22.9 | 0 |
| **Results** | | | | | | | | | | | |
| Gloss at angle 60 ° (GU) (ISO 2813) | 21.5 | *11.0* | 94.5 | 84.4 | 37.8 | 7.8 | 13 | 19.2 | 16.7 | 50.7 | 12.0 |
| Flow (PCI) | 2 | *1.0* | 3.0 | 2 | 2.0 | 2.0 | 2 | 1 | 1 | 3 | 1.0 |
| Dry adhesion (ISO 2409) | 0 | *0.0* | 0 | 0 | 5.0 | 3.0 | 0 | 0 | 0 | 2 | 0.0 |

(continued)

| Hybrid Exposure System (HE-XAP System) | | | | | | | | | | |
|---|---|---|---|---|---|---|---|---|---|---|
| Gloss Retention % (0 hr) | 100 | *100.0* | 100 | 100 | 100.0 | 100.0 | 100 | 100 | 100 | 100 | 100.0 |
| Gloss Retention % (100 hr) | 94 | *94.0* | 81.7 | 43.0 | Detatched | 84.6 | 83 | 89 | | 69 | 102.0 |
| Gloss Retention % (200 hr) | 80 | *56.0* | 29.0 | 5.0 | | 65.4 | 54 | 53 | 57.1 | 41 | 88.0 |
| Gloss Retention % (250 hr) | 71 | *48.0* | | | | 57.7 | 47 | 47 | | | 74.0 |
| Gloss Retention % (300 hr) | 67 | | | | | | | | | | 67.0 |
| Gloss Retention % (400 hr) | 58 | | | | | | | | | | 54.0 |
| Gross Retention % (500 hr) | 53 | | | | | | | | | | 46 |

The polymers used in the compositions of this invention have been used to attain good adhesion and hyper UV resistance. A good balance between the hydroxy functionalised silicones with phenyl, or phenyl and methyl, substituents and polyesters is necessary to attain these properties. The benefits of two single components combined can be obtained when combining them together as a two-component coating composition. As shown in CE-7 and E-5, the hydroxy functionalised silicone with phenyl, or phenyl and methyl, substituents to polyester weight ratio was same in each (41:59), however, UV resistance was better in the two-component coating composition.

Similarly, the 0:100 and 17:83 hydroxy functionalised silicone with phenyl, or phenyl and methyl, substituents to polyester weight ratio as observed in the single component comparative examples CE-4 and CE-5, although showing excellent adhesion, failed in UV resistance within less than 200 hours. Additionally, when the hydroxy functionalised silicone with phenyl, or phenyl and methyl, substituents to polyester weight ratio was greater than 50:50 in the single component comparative example CE-8 having a silicone to polyester weight ratio of 54:56 and CE-6 having a silicone to polyester weight ratio of 86:14, adhesion became poorer, which implies poorer corrosion resistance.

In contrast, in the two-component coating composition, the hydroxy functionalised silicone with phenyl, or phenyl and methyl, substituents to polyester weight ratio preferably ranges from 41:59 to 60:40 of the total formulation. When the hydroxy functionalised silicone with phenyl, or phenyl and methyl, substituents to polyester weight ratio was more than 40:60, UV resistance was enhanced as illustrated by example E-5 with gloss retention above 50 % after 500 hr, which is slightly better than the reference CE-2. On the contrary, when the hydroxy functionalised silicone with phenyl, or phenyl and methyl, substituents to polyester weight ratio was less than 41:59 the UV resistance was poorer, as observed in comparative examples CE-13 and CE-10 having a silicone to polyester weight ratio of 31:69 and 40:60 respectively, the gloss retention failed (47 %) at 250 hr.

The substantial amount of hydroxy functionalised silicone with phenyl, or phenyl and methyl, substituents in the total formulation is preferably contributed by the second component, as the amount of hydroxy functionalised silicone with phenyl, or phenyl and methyl, substituents in the first component is limited. As illustrated in comparative examples CE-14 and CE-15, when the Si:PE weight ratio was about 50:50 or less in the second component, the overall Si:PE in the total formulation was much lower than the 41:59 weight threshold as a result of higher amount of polyesters, and hence the UV resistance failed within 250 hr.

As evident from the examples of the invention it is possible to obtain a higher "loading" of hydroxy functionalized polysiloxane into the two-component compositions according to the present invention than in one-component compositions without having adhesion failure.

**Example 8: Effect of type of curing agent**

Table 11

| Examples of 2K coating compositions | E-11 | E-12 | CE-16 | CE-17 | |
|---|---|---|---|---|---|
| **First Component** | A-4 | A-5 | A-4 | A-9 | CE-5 |
| **Second Component** | B-10 | B-11 | B-3 | B-4 | - |
| Σ Binder system (wt%) | 70.8 | 87.0 | 71.0 | 69.8 | 69.10 |
| Si : PE weight ratio | 49:51 | 46:64 | 51:49 | 26:74 | 17:83 |
| Si + PE weight % | 66.5 | 81.9 | 67.9 | 61.2 | 67.3 |
| Si wt% of binder system | 45.7 | 43.2 | 48.5 | 23.5 | 16.6 |
| PE + curing agents wt% of binder system | 54.3 | 56.8 | 51.5 | 76.5 | 83.4 |
| Si wt% of total formulation | 32.4 | 37.5 | 34.4 | 15.8 | 11.5 |
| **Results** | | | | | |
| Gloss at angle 60 ° (GU) (ISO 2813) | 24 | 47 | 6.4 | 43.4 | 84.4 |
| Flow (PCI) | 2 | 2 | 1 | 2 | 2 |
| Dry adhesion (ISO 2409) | 0 | 0 | 4 | 0 | 0 |
| Hybrid Exposure System (HE-XAP System) | | | | | |
| Gloss Retention % (0 hr) | 100 | 100 | 100 | 100 | 100 |
| Gloss Retention % (100 hr) | 103 | 94 | 95 | 43 | 43.0 |
| Gloss Retention % (200 hr) | 95 | 83 | 87 | | 5.0 |
| Gloss Retention % (250 hr) | 94 | 78 | 73 | | |
| Gloss Retention % (300 hr) | 89 | 72 | 67 | | |
| Gloss Retention % (400 hr) | 85 | | 54 | | |
| Gross Retention % (500 hr) | 82 | | 43 | | |
| Gross Retention % (600 hr) | 77 | | | | |
| Gross Retention % (700 hr) | 76 | | | | |

The polyesters used in this invention requires curing agents. In the examples of the invention HAA may be used for curing the carboxy functional polyesters. TGIC is an alternative curing agent for carboxy functional polyesters but this is preferably avoided due to its health hazard implications.

The hydroxy functional polyesters are generally cured with polyisocyanates in the inventive examples. The type of polyisocyanates however, have an impact on the adhesion. Poor adhesion was observed when an internally blocked polyisocyanate was used as illustrated in comparative example CE-16. On the contrary, an excellent adhesion was obtained when a blocked adduct polyisocyanate was used in inventive examples E-11 and E-12.

Glycidyl methacrylic (GMA) is known to enhance UV resistance when used for curing polyesters, in addition to hydroxy functionalised silicones with phenyl, or phenyl and methyl, substituents. When GMA was used in combination with polyester and hydroxy functionalised silicone with phenyl, or phenyl and methyl, substituents, a rather poor UV resistance was observed as illustrated in comparative example CE-17 for a two-component coating composition which failed within 100 hrs.

**Example 9: Effect of Pigments/Fillers**

Table 12

| Examples of 2K coating compositions | E-5 | E-10 | E-1 | E-11 | E-12 | E-3 | E-4 | E-13 |
|---|---|---|---|---|---|---|---|---|
| **First Component** | A-3 | A-4 | A-2 | A-4 | A-5 | A-3 | A-3 | A-10 |
| **Second Component** | B-8 | B-9 | B-8 | B-10 | B-11 | B-13 | B-14 | B-19 |
| Σ Binder system (wt%) | 69.1 | 70.9 | 70.8 | 70.8 | 87.0 | 80.9 | 80.9 | 83.9 |
| Si : PE weight ratio | 41:59 | 42:58 | 49:51 | 49:51 | 46:64 | 60:40 | 60:40 | 47:53 |
| Si + PE wt% | 61.4 | 63.4 | 63.2 | 66.5 | 81.9 | 79.9 | 79.9 | 78.9 |
| Si wt% of binder system | 36.6 | 37.7 | 43.9 | 45.7 | 43.2 | 59.3 | 59.3 | 44.2 |
| PE + curing agents wt% of binder system | 63.4 | 62.3 | 56.1 | 54.3 | 56.8 | 40.7 | 40.7 | 55.8 |
| Si wt% of total formulation | 25.3 | 26.7 | 31.1 | 32.4 | 37.5 | 48.0 | 48.0 | 37.1 |
| **Results** | | | | | | | | |
| Gloss at angle 60 ° (GU) (ISO 2813) | 21.5 | 20 | 17.8 | 24 | 47 | 66.1 | 49.8 | 81.7 |
| Flow (PCI) | 2 | 2 | 2 | 2 | 2 | 3 | 2 | 3 |
| Dry adhesion (ISO 2409) | 0 | 0 | 0 | 0 | 0 | 0 | 0 | 0 |
| Hybrid Exposure System (HE-XAP System) | | | | | | | | |
| Gloss Retention % (0 hr) | 100 | 100 | 100 | 100 | 100 | 100 | 100 | 100 |
| Gloss Retention % (100 hr) | 94 | 98 | 94 | 103 | 94 | | | 93 |
| Gloss Retention % (200 hr) | 80 | 85 | 78 | 95 | 83 | 88.8 | 83.5 | 82 |
| Gloss Retention % (250 hr) | 71 | 82 | 72 | 94 | 78 | | | 81 |
| Gloss Retention % (300 hr) | 67 | 76 | 64 | 89 | 72 | | | 79 |
| Gloss Retention % (400 hr) | 58 | 71 | 59 | 85 | | | | 77 |
| Gross Retention % (500 hr) | 53 | 65 | 55 | 82 | | | | |
| Gross Retention % (600 hr) | | 62 | 52 | 77 | | | | |
| Gross Retention % (700 hr) | | 59 | 48 | 76 | | | | |
| Gross Retention % (800 hr) | | 53 | | | | | | |

Pigments and fillers are used in the examples of the invention to increase opacity, provide colour and to increase the powder volume. Fillers can also improve the mechanical properties by attaching to the binder components to increase stress and strain properties of the coating. Advantageously, the total amount of pigments can be varied in each component to achieve the desired opacity and colour. It is possible to have a clearer coat in one component as illustrated in examples E-3 and E-4, where the second component responsible for UV resistance will not compete with pigments for absorbing UV radiations.

In the examples of the invention, pigments and fillers varied from 8 to 28 wt % of the total formulation. In a typical light colour, such as white colour (E-5, E-10, E-1 and E-11) a higher amount of total pigment is required to obtain the right opacity, while darker colours, such as brown, (E-12 and E-13) required a lower amount of pigments to achieve the same. Such lower amounts of pigments in the darker colours allows for addition of fillers to achieve similar pigment level as seen in the white colours.

Critically, all coatings still achieved a high level of adhesion and UV resistance.

**Example 10: Effect of UV Stabilisers**

Table 13

| Examples of 2K coating compositions | E-10 | E-12 | E-2 | E-14 | | |
|---|---|---|---|---|---|---|
| **First Component** | A-4 | A-5 | A-2 | A-4 | CE-1 | CE_2 |

(continued)

| Examples of 2K coating compositions | E-10 | E-12 | E-2 | E-14 | | |
|---|---|---|---|---|---|---|
| **Second Component** | B-9 | B-11 | B-12 | B-15 | - | - |
| $\Sigma$ Binder system (wt%) | 70.9 | 87.0 | 74.4 | 71.0 | 65.68 | 64.82 |
| Si/Fluoro : PE weight ratio | 42:58 | 46:64 | 58:42 | 50:50 | 50:50 | 50:50 |
| Si/Fluoro + PE weight % | 63.4 | 81.9 | 71.2 | 69.4 | 51.25 | 50.58 |
| Si/Fluoro wt% of binder system | 37.7 | 43.2 | 55.9 | 48.5 | 39.0 | 39.0 |
| PE + curing agents wt% of binder system | 62.3 | 56.8 | 44.1 | 51.5 | 61.0 | 61.0 |
| Si wt% of total formulation | 26.7 | 37.5 | 41.6 | 34.4 | 0 | 0 |
| **Results** | | | | | | |
| Gloss at angle 60 ° (GU) (ISO 2813) | 20 | 47 | 24.7 | 29.4 | 11.0 | 12.0 |
| Flow (PCI) | 2 | 2 | 2 | 2 | 1.0 | 1.0 |
| Dry adhesion (ISO 2409) | 0 | 0 | 0 | 0 | 0.0 | 0.0 |
| Hybrid Exposure System (HE-XAP System) | | | | | | |
| Gloss Retention % (0 hr) | 100 | 100 | 100 | 100 | 100.0 | 100.0 |
| Gloss Retention % (100 hr) | 98 | 94 | 95 | 97 | 94.0 | 102.0 |
| Gloss Retention % (200 hr) | 85 | 83 | 84 | 87 | 56.0 | 88.0 |
| Gloss Retention % (250 hr) | 82 | 78 | 74 | 82 | 48.0 | 74.0 |
| Gloss Retention % (300 hr) | 76 | 72 | 68 | 76 | | 67.0 |
| Gloss Retention % (400 hr) | 71 | | 57 | 69 | | 54.0 |
| Gross Retention % (500 hr) | 65 | | | 65 | | 46 |
| Gross Retention % (600 hr) | 62 | | | 59 | | |
| Gross Retention % (700 hr) | 59 | | | 55 | | |
| Gross Retention % (800 hr) | 53 | | | 52 | | |

The use of UV stabilizers generally improves UV resistance against degradation. In the reference comparative examples CE-1 and CE-2 without and with UV stabilizers, respectively, the UV resistance performance is clearly improved from 200 hr in CE-1 to 400 hr before failing in CE-2. Similarly, the use of UV stabilizers improved the UV resistance in the examples of the invention, and in some examples (E-10 and E-14) gloss retention can go beyond 800 hr without failing. The UV stabilizers may be present in both components (E-12), but the UV stabilizers were preferably included in the second component (e.g. E-10). The second component composed largely of hydroxy functionalized polysiloxane and lower amount of pigments, being the UV resistance component, implies that it is this component that will be impacted most by UV radiation and heat. Therefore, the UV stabilizers were mainly present in the second component.

It is also possible to have a formulation without UV stabilizers, as illustrated in example E-2 with gloss retention above 50 % after 400 hr.

**Example 11: Effect of application method**

Selected examples and comparative examples for the first component and the second component of the two-component powder coating compositions were applied separately via dry-on-dry application. The first component was sprayed first and then the second component was sprayed on top of the uncured first component, prior to a single curing step. Table 14 below shows the DoD two-component compositions compared with the dry blended two-component compositions.

The two-component powder coating can either be applied as a dried blend or as a dry-on-dry (DoD). The two-component examples applied as dry blends have lower gloss and are generally more textured than the similar DoD-applied examples as shown in the Table 14. This can be illustrated by example E-4. When E-4 was applied as a dry blend it obtained 49.8 GU and PCI 2, thus is semi-glossy and semi-textured compared with 71 GU and PCI 6 for the DoD with glossy and smooth finish. This can be attributed to the limited extent of post extrusion mixing in DoD compared with dry blending. This leads to a higher degree of incompatibility effect or influence in the examples applied as dry blends than in the DoD-applied examples giving a reduced final gloss.

The UV resistance for both dry blend and DoD applied individual examples were generally similar, for example E-10 and E-11 both passed beyond 800 hr exposure. On the other hand, the comparable example CE-14 DoD already failed within 200 hr while the dry blend failed beyond 200 hr. Nevertheless, at 200 hr the CE-14 dry blend was 57 % GR whilst the inventive examples E-3 and E-4 were beyond 83 % for both dry blend and DoD. Therefore, the two-component powder coatings although they may have some differences in gloss and appearance, have similar UV durability independently of the application technique.

**Table 14**

| | CE-14 | | E-10 | | E-11 | | E-3 | | E-4 | |
|---|---|---|---|---|---|---|---|---|---|---|
| **First Component** | A-3 | | A-4 | | A-4 | | A-3 | | A-3 | |
| **Second Component** | B-2 | | B-9 | | B-10 | | B-13 | | B-14 | |
| **Application** | Dry blend | DoD | Dry blend | DoD | Dry blend | DoD | Dry blend | DoD | Dry blend | DoD |
| **Test results** | | | | | | | | | | |
| Gloss at angle 60 ° (GU) (ISO 2813) | 16.7 | 24.0 | 20.0 | 33.0 | 24.0 | 41.0 | 66.1 | 86.0 | 49.8 | 71.0 |
| Flow (PCI) | 1 | 4.0 | 2.0 | 2.0 | 2.0 | 3.0 | 3.0 | 3.0 | 2.0 | 6.0 |
| Dry adhesion (ISO 2409) | 0 | 0.0 | 0.0 | 0.0 | 0.0 | 0.0 | 0.0 | 0.0 | 0.0 | 0.0 |
| **Hybrid Exposure System (HE-XAP System)** | | | | | | | | | | |
| Gloss Retention % (0 hr) | 100 | 100.0 | 100.0 | 100.0 | 100.0 | 100.0 | 100.0 | 100.0 | 100.0 | 100.0 |
| Gloss Retention % (100 hr) | | | 98.0 | 87.0 | 103.0 | 86.0 | | | | |
| Gloss Retention % (200 hr) | 57.1 | 34.0 | 85.0 | 77.0 | 95.0 | 85.0 | 88.8 | 85.9 | 83.5 | 94.1 |
| Gloss Retention % (250 hr) | | | 82.0 | 76.0 | 94.0 | 84.0 | | | | |
| Gloss Retention % (300 hr) | | | 76.0 | 72.0 | 89.0 | 82.0 | | | | |
| Gloss Retention % (400 hr) | | | 71.0 | 70.0 | 85.0 | 79.0 | | | | |
| Gross Retention % (500 hr) | | | 65 | 68.0 | 82.0 | 74.0 | | | | |
| Gross Retention % (600 hr) | | | 62.0 | 63.0 | 77.0 | 72.0 | | | | |
| Gross Retention % (700 hr) | | | 59.0 | 61.0 | 76.0 | 70.0 | | | | |
| Gross Retention % (800 hr) | | | 53.0 | 57.0 | | 63.0 | | | | |

**Example 12: Natural Accelerated test - EMMAQUA (Equatorial Mount with Mirrors for Acceleration with Water)**

Table 15

| Radiance (MJ UV) | Florida equivalent (yr) | CE-14 | CE-14 | E-3 | E-3 |
|---|---|---|---|---|---|
| | | Dry blend | DoD | Dry blend | DoD |
| 0 | 0 | 100.0 | 100.0 | 100.0 | 100.0 |
| 290 | 1 | 100.0 | 100.0 | 100.0 | 100.0 |
| 580 | 2 | 87.5 | 80.0 | 88.5 | 89.5 |
| 870 | 3 | 70.8 | 73.3 | 87.2 | 87.7 |
| 1160 | 4 | 54.2 | 63.3 | 93.0 | 85.9 |
| 1450 | 5 | 45.8 | 56.7 | 86.0 | 85.9 |
| 1740 | 6 | 37.0 | 46.7 | 82.5 | 83.3 |

Table 15 shows gloss retention of some selected examples exposed to natural weathering using EMMAQUA to ascertain that the HE-XAP method is comparable to natural exposure. The gloss retention of inventive example E-3 for both dry blend and DoD was about 83 % after 1740 MJ UV exposure, implying a 6-year Florida natural exposure equivalent. This is well within both the Qualicoat class 3 and AAMA 2605 standards for natural weathering requirements, where 80 % gloss retention is required after 3 years for the initial approvals. On the other hand, the gloss retention of comparative example CE-14 was about 71 or 73 % after 870- or 3-years Florida natural exposure equivalent, implying that CE-14 did not meet Qualicoat class 3 and AAMA 2605 weathering qualification.

Furthermore, although the HE-XAP for the examples of the invention and comparable examples above were only to 200 hrs, where gloss retention for the dry blend CE-14 was 57 % and dry blend E-3 was 89 %, this can be compared with the EMMAQUA exposure. Clearly the EMMAQUA exposure follows the same trend for the dry blend application where CE-14 failed (46 %) at 1450 MJUV while E-3 stayed at 86 % at same exposure time. Similarly, the same trend was observed in the DoD for E-3, where the gloss retention was 34 % for CE-14 and 86 % for E-3 after 200 hours of HE-XAP exposure and 57 % for CE-14 and 86 % for E-3 after 1450 MJUV exposure. It is important to note that since the dry blend and DoD differ in gloss level, appearance and to some degree chemical environment on the surface, despite using the exact same first and second components, it is expected that the degradation process and its kinetics may also differ when exposed to different weathering tests. This notwithstanding, overall, the use of HE-XAP is a faster method to distinguish between the durability of coatings, particularly within the same application method and follows the same trend as natural exposure.

Moreover, coatings from composition E-11 dry blend and DoD, were tested and compared to Qualicoat class 3 specification standards

Table 16

| Inventive example | E-11 | E-11 | Qualicoat Class 3 specification |
|---|---|---|---|
| Application | Dry blend | DoD | |
| Dry film thickness (um) | 50-70 | 50-70 | |
| Dry Adhesion (Iso 2409) | | | |
| 1 mm + tape (Gt) | 0 | 0 | No sign of blistering (0) |
| Wet Adhesion | | | |
| Blistering | 0 | 0 | No sign of blistering (0) |
| 1 mm + tape (Gt) | 0 | 0 | No sign of detachment (0) |
| Water spot effect test | | | |
| $\Delta L$ (CIELAB) | 0.2 | 0.3 | $\Delta L < 4$ |
| $\Delta E$ (CIELAB) | 0.8 | 0.7 | |
| Cupping test (Iso 1520) | | | |
| Tape pull at 5 mm | Pass | Pass | No sign of detachment after tape pull adhesion test |
| Bend test (Iso 1519) | | | |

(continued)

| Inventive example | E-11 | E-11 | Qualicoat Class 3 specification |
|---|---|---|---|
| Application | Dry blend | DoD | |
| Tape pull at 5 mm | Pass | Pass | No sign of detachment after tape pull adhesion test |
| Impact test (ASTM D 2794) | | | |
| Tape pull at 2.5 Nm reverse | Pass | Pass | No sign of detachment after tape pull adhesion test |
| Acetic Acid Salt spray (ISO 9227) | | | |
| Substrate/ Pre-treatment | AI/NAB U | AI/NA BU | |
| Exposure time (hr) | 2000 | 2000 | 2000 |
| Blistering | 0 | 0 | No blistering in excess of 2 (ISO 4628-2) |
| Surface rust | 0 | 0 | |
| Constant climate condensation water test (ISO 6270-2) | | | |
| Substrate/ Pre-treatment | AI/NAB U | AI/NA BU | |
| Exposure time | 2000 h | 2000 h | |
| Blistering | 0 | 0 | No blistering in excess of 2 (ISO 4628-2) |
| Surface rust | 0 | 0 | |
| Color difference - $\Delta E$ | 1.0 | 0.8 | |
| Abrasion resistance, Martindale | | | |
| Gloss, initial, (angle 60 °) | 25.1 | 47 | |
| Gloss, after test, (angle 60 °) | 17.9 | 33.3 | |
| Gloss retention (%) | 71.3 | 70.9 | > 30 % |

Extensive testing was performed on E-11 compared to selected tests from Qualicoat and AAMA standards. For brevity, the comparison was made between E-11 and Qualicoat class 3 requirements. The results are shown in Table 16 for both dry blending and DoD.

The inventive example was tested with 50-70 $\mu$m film thickness which showed excellent dry and wet adhesion without any detachment. The E-11 examples showed high scratch and mar resistance depicted by relatively low change in gloss during the abrasion resistance test. No water spot effect was observed as the colour change remained very low below 1 (CIELAB $\Delta E$ and $\Delta L$). In terms of mechanical testing, the inventive E-11 examples did not show any detachment of the coated film following tape pull adhesion test when the coating was subjected to 5 mm cupping, 5 mm mandrel bend and 2.5 Nm reverse impact test. In terms of corrosion testing, the E-11 examples showed no blistering, or sign of rust when set in constant climate (humidity) and Acetic Acid Salt spray chambers for 2000 hr.

Overall, the invention shows high level of robustness and durability for both mechanical, corrosion and chemical resistance base on the selected methods compared to Qualicoat class 3 and AAMA standards.

## Claims

1. A two-component powder coating composition comprising:

   (i) a first component comprising:

       (a) a polyester having carboxy functional groups and/or a polyester having hydroxy functional groups;
       (b) a curing agent for said polyester (a) selected from a blocked polyisocyanate curing agent, a beta-hydroxy alkyl amide (HAA) curing agent, or a combination thereof; and
       (c) optionally, a hydroxy functionalised silicone with phenyl, or phenyl and methyl, substituents;

and
(ii) a second component comprising:

(a) a hydroxy functionalised silicone with phenyl, or phenyl and methyl, substituents;
(b) optionally a polyester having carboxy functional groups and/or a polyester having hydroxy functional groups;
(c) a curing agent for said polyester (b), if present; selected from a blocked polyisocyanate curing agent, a beta-hydroxy alkyl amide (HAA) curing agent, or a combination thereof

wherein

said first component and said second component are different; and
the weight ratio of said hydroxy functionalised silicone(s) with phenyl, or phenyl and methyl, substituents to said polyester(s) having carboxy and/or hydroxy functional groups is greater than 40:60, based on the total composition.

2.  A composition as claimed in claim 1, wherein said first component comprises a polyester having carboxy functional groups having an AV of 15-50 mg KOH/g, and preferably 18-46 mg KOH/g and/or a polyester having hydroxy functional groups having an OHV of 20-250 mg KOH/g and more preferably 25-240 mg KOH/g;
and said second component optionally comprises a polyester having carboxy functional groups having an AV of 15-50 mg KOH/g, and preferably 18-46 mg KOH/g and/or a polyester having hydroxy functional groups having an OHV of 20-250 mg KOH/g and more preferably 25-240 mg KOH/g.

3.  A composition as claimed in claim 1 or 2, wherein said first component optionally comprises a hydroxy functionalised silicone with phenyl, or phenyl and methyl, substituents having a OH content of 3.5-7 %; and
said second component comprises a hydroxy functionalised silicone with phenyl, or phenyl and methyl, substituents having a OH content of 3.5-7 %.

4.  A composition as claimed in any one of claims 1 to 3, wherein said second component contains a higher wt% of hydroxy functionalised silicone with phenyl, or phenyl and methyl, substituents, compared to said first component; and/or
said second component contains a lower wt% of polyester having carboxy functional groups and/or polyester having hydroxy functional groups, compared to said first component.

5.  A composition as claimed in any preceding claim, wherein the weight ratio of said hydroxy functionalised silicone(s) with phenyl, or phenyl and methyl, substituents to said polyester(s) having carboxy functional groups and/or having hydroxy functional groups in said first component is 0:100-22:78, preferably 0:100 to 20:80 and more preferably 0:100 to 17:83.

6.  A composition as claimed in any preceding claim, wherein the weight ratio of said hydroxy functionalised silicone(s) with phenyl, or phenyl and methyl, substituents to said polyester(s) having carboxy functional groups and/or having hydroxy functional groups in said second component is 100:0 to 75:25, preferably 100:0 to 80:20.

7.  A composition as claimed in any preceding claim, comprising:

(i) a first component comprising:

(a) 50-90 wt% of a polyester having carboxy functional groups and/or a polyester having hydroxy functional groups;
(b) 1-11 wt% of a curing agent for the polyester (a) selected from a blocked polyisocyanate curing agent, a beta-hydroxy alkyl amide (HAA) curing agent, or a combination thereof; and
(c) optionally 0-15 wt% of a hydroxy functionalised silicone with phenyl, or phenyl and methyl, substituents, each based on the total weight of the first component;

and
(ii) a second component comprising:

(a) 45-98 wt% of a hydroxy functionalised silicone with phenyl, or phenyl and methyl, substituents; and

43

(b) optionally 0-19 wt% a polyester having carboxy functional groups and/or a polyester having hydroxy functional groups; and

(c) 0-16 wt% of a curing agent for the polyester (b), if present selected from a blocked polyisocyanate curing agent, a beta-hydroxy alkyl amide (HAA) curing agent, or a combination thereof, each based on the total weight of the second component; wherein the first component and the second component are different, and the weight ratio of silicone to polyester is above 40:60, preferably 41:59 to 65:35, based on the total composition.

8. A composition as claimed in any preceding claim, wherein the weight ratio of the total hydroxy functionalised silicone(s) with phenyl, or phenyl and methyl, substituents to the total polyester(s) having carboxy functional groups and/or having hydroxy functional groups is 41:59 to 65:35, preferably 41:59 to 62:38 and more preferably 42:58 to 60:40, based on the total composition.

9. A composition as claimed in any preceding claim, wherein said first component and/or said second component comprises colour pigments, fillers and/or UV stabilisers.

10. A method of making a two-component powder coating composition as claimed in any one of claims 1 to 9, comprising:

(i) preparing a first component by mixing:

(a) a polyester having carboxy functional groups and/or a polyester having hydroxy functional groups;
(b) a curing agent for said polyester (a) selected from a blocked polyisocyanate curing agent, a beta-hydroxy alkyl amide (HAA) curing agent, or a combination thereof; and
(c) optionally, a hydroxy functionalised silicone with phenyl, or phenyl and methyl, substituents;

and
(ii) preparing a second component by mixing:

(a) a hydroxy functionalised silicone with phenyl, or phenyl and methyl, substituents;
(b) optionally a polyester having carboxy functional groups and/or a polyester having hydroxy functional groups;
(c) a curing agent for said polyester (b), if present, selected from a blocked polyisocyanate curing agent, a beta-hydroxy alkyl amide (HAA) curing agent, or a combination thereof, and

optionally blending said first and second components.

11. Use of a two-component powder coating composition as claimed in any one of claims 1 to 9 to coat at least one surface of a substrate, in particular a metal substrate.

12. A kit for preparing a two-component powder coating composition as claimed in any one of claims 1 to 9, comprising:

(i) a first container containing a first component comprising:

(a) a polyester having carboxy functional groups and/or a polyester having hydroxy functional groups;
(b) a curing agent for said polyester (a) selected from a blocked polyisocyanate curing agent, a beta-hydroxy alkyl amide (HAA) curing agent, or a combination thereof; and
(c) optionally, a hydroxy functionalised silicone with phenyl, or phenyl and methyl, substituents;

and
(ii) a second container containing a second component comprising:

(a) a hydroxy functionalised silicone with phenyl, or phenyl and methyl, substituents;
(b) optionally a polyester having carboxy functional groups and/or a polyester having hydroxy functional groups;
(c) a curing agent for said polyester (b), if present, selected from a blocked polyisocyanate curing agent, a beta-hydroxy alkyl amide (HAA) curing agent, or a combination thereof.

13. A method of coating a substrate, preferably a metal substrate, with a two-component powder coating composition as claimed in any one of claims 1 to 9, comprising:

> Mixing said first component and said second component to produce a powder blend;
> Applying said powder blend to at least one surface of said substrate; and
> Curing said powder blend to produce said coating; or
> Applying said first component to at least one surface of said substrate to produce a layer of first component;
> Applying said second component to said layer of first component to produce a layer of second component; and
> Curing said layers to produce said coating.

14. A coating, preferably a cured coating, comprising a two-component powder coating composition as claimed in any one of claims 1 to 9.

15. A substrate, preferably a metal substrate, coated with a two-component powder coating composition as claimed in any one of claims 1 to 9.

Europäisches
Patentamt

European
Patent Office

Office européen
des brevets

# EUROPEAN SEARCH REPORT

**Application Number**

EP 24 21 7958

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 114 350 253 B (GUANGDONG TIUN QIANJIANG POWDER PAINT SCIENT RESEARCH LIMITED COMPANY) 14 April 2023 (2023-04-14) * page 3, par. 0003; pages 5-7, par. 0041-48, table 1, ex. 1; claims 1, 2, 6 * ----- | 1-15 | INV. C08G18/38 C08G18/42 C08G18/80 C09D175/04 C09D175/06 |
| X | CN 111 057 466 A (KANGNAM JEVISCO POWDER COATINGS ZHANGJIAGANG CO LTD) 24 April 2020 (2020-04-24) * page 3, par. 0004-5; page 4, par. 0033-35; page 6, par. 0052-54, table 1, ex. 1, 7; claims 1-7 * ----- | 1-15 | C08G18/32 C08G18/50 C08G18/61 C08G77/458 C09D167/00 |

**TECHNICAL FIELDS SEARCHED (IPC)**

C08G
C09D
C09J

The present search report has been drawn up for all claims

| Place of search | Date of completion of the search | Examiner |
|---|---|---|
| Munich | 26 April 2025 | Stefaniu, Cristina |

EPO FORM 1503 03.82 (P04C01)

**ANNEX TO THE EUROPEAN SEARCH REPORT
ON EUROPEAN PATENT APPLICATION NO.**                    EP 24 21 7958

This annex lists the patent family members relating to the patent documents cited in  the above-mentioned European search report.
The members are as contained in the European Patent Office EDP file on
The European Patent Office is in no way liable for these particulars which are merely given for the purpose of information.

26-04-2025

| Patent document cited in search report | | Publication date | Patent family member(s) | Publication date |
|---|---|---|---|---|
| CN 114350253 | B | 14-04-2023 | NONE | |
| CN 111057466 | A | 24-04-2020 | NONE | |

EPO FORM P0459

For more details about this annex : see Official Journal of the European Patent Office, No. 12/82